# EUROPEAN PATENT SPECIFICATION

(11) **EP 3 741 213 B1**
(45) Date of publication and mention of the grant of the patent: **17.08.2022**
(21) Application number: 18901333.7
(22) Date of filing: 25.12.2018
(51) Int. Cl.: A01K 87/04, B29C 45/00, B29C 45/14, B29L 31/00

(54) **METHOD AND INJECTION MOLDING APPARATUS FOR MANUFACTURING A FISHING LINE GUIDE**
VERFAHREN UND SPRITZGIESSVORRICHTUNG ZUR HERSTELLUNG EINER ANGELSCHNURFÜHRUNG
PROCÉDÉ ET DISPOSITIF DE MOULAGE PAR INJECTION POUR LA FABRICATION D'UN GUIDE DE LIGNE DE PÊCHE

(30) Priority: 17.01.2018 JP 2018005465; 28.02.2018 KR 20180024644; 09.08.2018 KR 20180093078
(43) Date of publication of application: 25.11.2020
(73) Proprietor: Fuji Kogyo Co., Ltd., Shizuoka-shi, Shizuoka 422-8564 (JP)
(72) Inventor: OMURA, Kazuhito, Shizuoka-shi, Shizuoka 422-8564 (JP)
(74) Representative: EIP
(86) International application number: PCT/JP2018/047622
(87) International publication number: WO 2019/142623

(56) References cited:
- WO-A1-2011/102398
- WO-A1-2015/178174
- WO-A1-2015/178174
- GB-A- 2 260 471
- JP-A- H09 172 914
- JP-A- 2004 081 080
- JP-A- 2011 223 920
- JP-U- S5 894 380
- JP-Y2- H 077 726
- KR-U- 19980 058 280

## Description

### TECHNICAL FIELD

The present disclosure relates to a fishing line guide which is attached to a fishing rod and guides a fishing line, and a method of manufacturing the fishing line guide. Further, the present disclosure relates to an injection molding apparatus that can be used for manufacturing a fishing line guide.

### BACKGROUND ART

To guide a fishing line when casting a fishing rig or when landing a fish, a fishing line guide is attached to a tubular rod of a fishing rod. The fishing line guide has: a guide ring through which a fishing line passes; a frame holding and supporting the guide ring; and an attachment portion coupled to the frame and attached to a tubular rod of a fishing rod.

A movable guide or a sliding guide is used in a so-called telescopic fishing rod among fishing rods. The movable guide is fixed to an outer peripheral surface of a tubular rod of a fishing rod through interference fit. The movable guide has an annular attachment portion through which the tubular rod of the fishing rod passes. The movable guide is movable along the tubular rod in the state where the tubular rod passes through the attachment portion. The movable guide is fixed to the tubular rod through interference fit between the attachment portion and the outer peripheral surface of the tubular rod.

By way of example of the movable guide, Japanese Patent Publication No. 4275457 (patent document 1) and Japanese Utility Model Application Publication No. 1995-7726 (patent document 2) disclose a movable guide including an annular attachment portion and a metallic frame. The annular attachment portion is fitted with a tubular rod. The metallic frame has an attachment ring which supports a guide ring and is fitted with the attachment portion. WO2011102398, which is considered to represent the most relevant state of the art for the subject-matter of claim 1, discloses line guides for a fishing rod having sections formed integrally using a prepreg consisting of high-strength fibers.

GB2260471 A, which is considered to represent the most relevant state of the art for the subject-matter of claim 8, discloses a method of manufacturing a line guide for use on a fishing rod.

### PRIOR ART DOCUMENTS

### Patent Document

Patent document 1: Japanese Patent Publication No. 4275457
Patent document 2: Japanese Utility Model Application Publication No. 1995-7726

### SUMMARY OF THE INVENTION

### Problem to be solved by the Invention

To install a movable guide in a telescopic fishing rod, an annular attachment portion of the movable guide is slid toward a rear end of the fishing rod. The tubular rod of the telescopic fishing rod has a tapering shape whose diameter gradually decreases toward a tip end of the fishing rod. Thus, the attachment portion may be fixed to the outer peripheral surface of the tubular rod at a location where an inner diameter of the attachment portion is equal to an outer diameter of the tubular rod. At this time, if the attachment portion is strongly pushed toward the rear end of the fishing rod, then the attachment portion is slightly deformed and the attachment portion may be fixed with the outer peripheral surface of the tubular rod through interference fit.

When a fishing rig is cast or a fish is landed, various external forces act on the frame coupled to the attachment portion. For example, if an external force is applied to the frame in a transverse direction of the fishing rod, the frame and the attachment portion may be rotated about the tubular rod. In that event, the movable guide loses its function of guiding a fishing line. However, the movable guide, which has the annular attachment portion and the frame coupled to the attachment portion by the attachment ring, does not have a sufficient rotation prevention strength that resists the force applied to the frame in the transverse direction. Therefore, the movable guide tends to be easily rotated about the tubular rod because of an impact carelessly applied to the frame by a user or because of an impact applied to the frame by a rock or a ground surface at a fishing place. The movable guide is not designed so as to have a high rotation prevention strength resisting the rotation about the tubular rod.

The telescopic fishing rod may be used for fishing on a waterside, a seashore, a seashore rock, etc. The telescopic fishing rod for seashore rock fishing may have an overall length of 4.5m to 5.5m, and ten to fifteen movable guides may be generally attached to such a telescopic fishing rod. A lightweight fishing rod is advantageous in view of smoothly casting a fishing rig or easily landing a fish. To this end, the telescopic fishing rod requires lightweight movable guides. However, due to the metallic frame having the metallic attachment ring, the movable guide of a prior art does not cope with weight reduction.

In the movable guide, since the metallic frame having the attachment ring, and the attachment portion made of plastic are manufactured individually, a process of assembling the attachment ring to the attachment portion should be necessarily performed. When dimensional mismatch occurs between the attachment ring and the attachment portion, or when the amount of adhesive applied between the attachment ring and the attachment portion is insufficient, such a defect as the frame having the attachment ring is rotated with respect to the attachment portion is highly likely to occur in the movable guide.

Further, in the movable guide, a process of forming the attachment ring to the frame and a process of assembling the attachment ring to the attachment portion should be necessarily performed. Therefore, the number of the processes for manufacturing the movable guide becomes too many, the movable guide cannot be efficiently manufactured, and many defects are generated in the manufactured movable guide.

The tubular rods of the telescopic fishing rod have an outer diameter that gradually decrease toward the tip end of the fishing rod. When a large number of movable guides are provided in the telescopic fishing rod, the attachment portions of such movable guides must have different inner diameters so as to correspond to various outer diameters of the tubular rods. Thus, in the movable guides in which the frame and the attachment portion are coupled to each other through fitting between the attachment ring of the frame and the attachment portion, many frames having the attachment rings whose diameters are different from one another should be manufactured, and many dies for working the respective frames should be used. Therefore, the number of the dies for working the frames and the cost for the dies are excessive.

Disclosed embodiments provide a fishing line guide and a manufacturing method thereof which solve at least some of the aforementioned problems of the prior art.

### Means for Solving the Problem

According to an embodiment, there is provided a method of manufacturing a fishing line guide which does not include an attachment ring fitted with an attachment portion and has a light weight thereby. According to an embodiment, there is provided a method of manufacturing a fishing line guide which reduces the number of manufacturing processes, the number of required dies, and manufacturing cost. According to an embodiment, there is provided a method of manufacturing a fishing line guide having an excellent rotation prevention strength and an excellent bending strength. According to an embodiment, there is provided a method of manufacturing a fishing line guide which has an improved rotation prevention strength and an improved bending strength and is capable of smoothly untangling the line tangle of a fishing line.

One aspect of the disclosed embodiments relates to a method of manufacturing a fishing line guide which has a guide ring for guiding a fishing line and is attachable to a tubular rod of a fishing rod. The method of manufacturing a fishing line guide includes: working a ring support that holds and supports a guide ring; and injection molding an annular attachment portion having an inner peripheral surface to be fitted with an outer peripheral surface of the tubular rod. The ring support is composed of a metallic thin plate. The ring support includes a ring holding portion holding the guide ring, and a ring supporting portion integrally formed with the ring holding portion. The ring supporting portion is bent at a first bending angle with reference to a first bending portion which extends to a lower end of the ring supporting portion in a downward direction toward the tubular rod when the fishing line guide is attached to the fishing rod. The attachment portion is injection molded from a resin material by using the ring support as an insert such that a lower portion of the ring supporting portion including a lower portion of the first bending portion is embedded in the attachment portion. The ring support and the attachment portion are partially coupled to each other.

In an embodiment, the resin material composing the attachment portion is carbon long fiber reinforced resin.

In an embodiment, the working the ring support includes: forming a through-hole, to which the guide ring is coupled, in a metal sheet; bending the metal sheet such that the first bending portion is formed in the metal sheet; and blanking the ring support from the metal sheet.

In an embodiment, the ring holding portion of the ring support is bent at a second bending angle with respect to the ring supporting portion with reference to the second bending portion which is a boundary between the ring holding portion and the ring supporting portion and is connected to the first bending portion, and which extends from one lateral end of the ring support to an opposite lateral end of the ring support and is convex toward a lower end of the ring support. The bending the metal sheet includes bending the metal sheet such that the second bending portion is formed in the metal sheet.

In an embodiment, the working the ring support includes, before the bending the metal sheet, forming a pair of first openings, which are located in the ring supporting portion and are formed to be perforated through the ring supporting portion symmetrically with respect to the first bending portion, in the metal sheet. The first openings are filled with the resin material composing the attachment portion through the injection molding the attachment portion.

In an embodiment, the forming the through-hole includes forming a reinforcing flange, which is fitted with the guide ring at an inner peripheral surface of the reinforcing flange, by making the whole circumference of the through-hole protrude from the metal sheet.

In an embodiment, the forming the through-hole includes forming a plurality of fitting protrusions, which come into contact with the outer peripheral surface of the guide ring, in the inner peripheral surface of the reinforcing flange.

Another aspect of the disclosed embodiments relates to an injection molding apparatus for use in manufacturing a fishing line guide that includes a ring support and an annular attachment portion. The attachment portion is composed of a hardened resin material, and has an inner peripheral surface to be fitted with an outer peripheral surface of a tubular rod of a fishing rod. The ring support is composed of a metallic thin plate. The ring support has a ring holding portion holding a guide ring for guiding a fishing line, and a ring supporting portion integrally formed with the ring holding portion. The ring supporting portion is bent at a first bending angle with reference to a first bending portion which extends to an end portion in a downward direction toward the tubular rod when the fishing line guide is attached to the fishing rod. The injection molding apparatus according to an embodiment includes an upper die, a lower die, and an ejector. The upper die has a first molding cavity formed to injection mold a portion of the attachment portion. The lower die has a second molding cavity and an insert seat. The second molding cavity is formed to injection mold the remainder portion of the attachment portion. The ring support is seated on and fixed to the insert seat. The insert seat is formed to extend from the second molding cavity such that a portion of the ring supporting portion including a portion of the first bending portion is inserted into the second molding cavity. The ejector separates the injection-molded attachment portion from the lower die.

According to an embodiment, the ejector includes an ejector sleeve, and the ejector sleeve has an annular ejecting surface that comes into contact with an annular surface of the injection-molded attachment portion by surface contact.

### Effect of the Invention

According to an embodiment, the ring support is composed of a metallic thin plate. Such a ring support and the attachment portion are partially coupled to each other in such a manner that a portion of the ring support is embedded in the attachment portion composed of a hardened resin material, thereby realizing a lightweight fishing line guide. Further, according to an embodiment, the attachment portion is injection molded from the resin material by using the ring support as an insert such that a portion of the ring support is embedded in the attachment portion. Thus, the number of the processes for manufacturing the fishing line guide, the number of the dies for manufacturing the fishing line guide, and manufacturing cost are reduced. Further, according to an embodiment, since the bending portion is provided in the ring support, the rotation prevention strength and the bending strength of the fishing line guide are improved. Further, according to an embodiment, the ring support having the bending portion can smoothly untangle the line tangle of a fishing line.

### BRIEF DESCRIPTION OF THE DRAWINGS

FIG. 1 shows one example of a fishing rod including a fishing line guide according to an embodiment of the present disclosure.
FIG. 2 is a perspective view showing a fishing line guide according to a first embodiment of the present disclosure.
FIG. 3 is an exploded perspective view of the fishing line guide shown in FIG. 2.
FIG. 4 is a plan view of the fishing line guide shown in FIG. 2.
FIG. 5 is a right side view of the fishing line guide shown in FIG. 2.
FIG. 6 is a sectional view of the fishing line guide taken along the line 6-6 of FIG. 2.
FIG. 7 is a perspective view showing a ring support shown in FIG. 3.
FIG. 8 is a sectional view of the ring support taken along the line 8-8 of FIG. 7.
FIG. 9 is a right side view showing the ring support shown in FIG. 7.
FIG. 10 is a rear view showing the ring support shown in FIG. 7.
FIG. 11 is a perspective view showing a fishing line guide according to a second embodiment of the present disclosure.
FIG. 12 is a right side view of the fishing line guide shown in FIG. 11.
FIG. 13 is a rear view of the fishing line guide shown in FIG. 11.
FIG. 14 is a front view of the fishing line guide shown in FIG. 11.
FIG. 15 is a perspective view showing a ring support shown in FIG. 11.
FIG. 16 is a sectional view taken along the line 16-16 of FIG. 11.
FIG. 17 is a perspective view showing a fishing line guide according to a third embodiment of the present disclosure.
FIG. 18 is a perspective view showing a ring support shown in FIG. 17.
FIG. 19 is a right side view of the fishing line guide shown in FIG. 17.
FIG. 20 is a sectional view taken along the line 20-20 of FIG. 17.
FIG. 21 is a longitudinal sectional view showing a guide ring and a ring support.
FIG. 22A shows an example where a line tangle of a fishing line occurs in a fishing line guide according to an embodiment.
FIG. 22B shows an example where a line tangle of a fishing line occurs in a fishing line guide according to an embodiment.
FIG. 22C shows an example where a line tangle of a fishing line occurs in a fishing line guide according to an embodiment.
FIG. 22D shows an an example where a line tangle of a fishing line occurs in a fishing line guide according to an embodiment.
FIG. 22E shows an example where a line tangle of a fishing line occurs in a fishing line guide according to an embodiment.
FIG. 22F shows an example where a line tangle of a fishing line occurs in a fishing line guide according to an embodiment.
FIG. 22G shows an example where the line tangle of a fishing line is untangled in a fishing line guide according to an embodiment.
FIG. 22H shows a ring support according to a comparative example in which the line tangle cannot be untangled.
FIG. 23 is a rear view showing a fishing line guide according to a fourth embodiment of the present disclosure.
FIG. 24 is a sectional view taken along the line 24-24 of FIG. 23.
FIG. 25 is a perspective view showing a fishing line guide according to a fifth embodiment of the present disclosure.
FIG. 26 is a front view of the fishing line guide shown in FIG. 25.
FIG. 27 is a front view showing a variation example of the fishing line guide according to the fifth embodiment.
FIG. 28A shows an example where a line tangle occurs in the fishing line guide shown in FIG. 25.
FIG. 28B shows an example where a line tangle occurs in the fishing line guide shown in FIG. 25.
FIG. 28C shows an example where a line tangle occurs in the fishing line guide shown in FIG. 25.
FIG. 28D shows an example where a line tangle occurs in the fishing line guide shown in FIG. 25.
FIG. 28E shows an example where a line tangle occurs in the fishing line guide shown in FIG. 25.
FIG. 28F shows an example where the line tangle is untangled in the fishing line guide shown in FIG. 25.
FIG. 28G shows an example where the line tangle is untangled in the fishing line guide shown in FIG. 25.
FIG. 28H shows an example where the line tangle is untangled in the fishing line guide shown in FIG. 25.
FIG. 281 shows an example where the line tangle is untangled in the fishing line guide shown in FIG. 25.

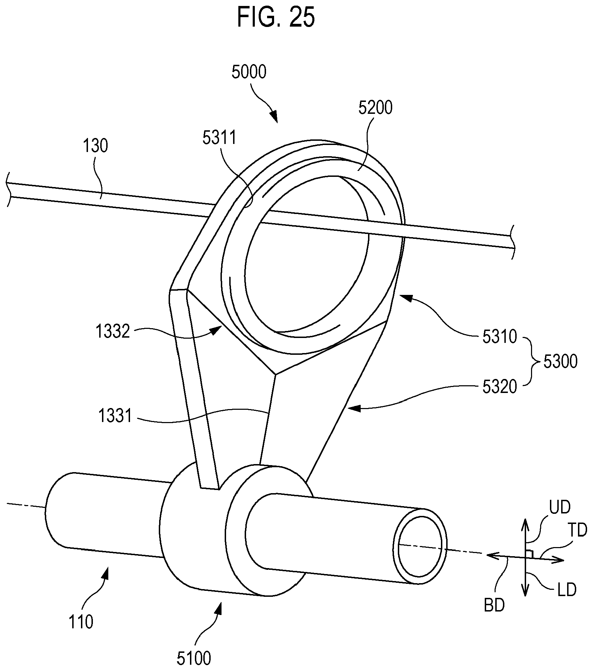

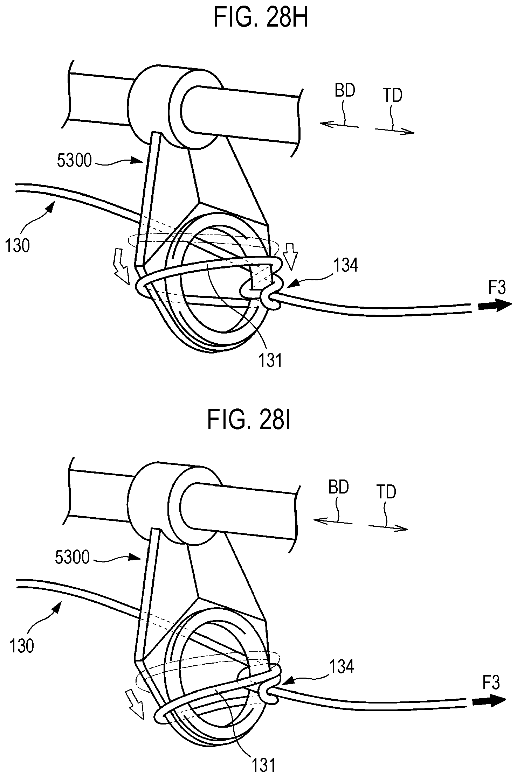

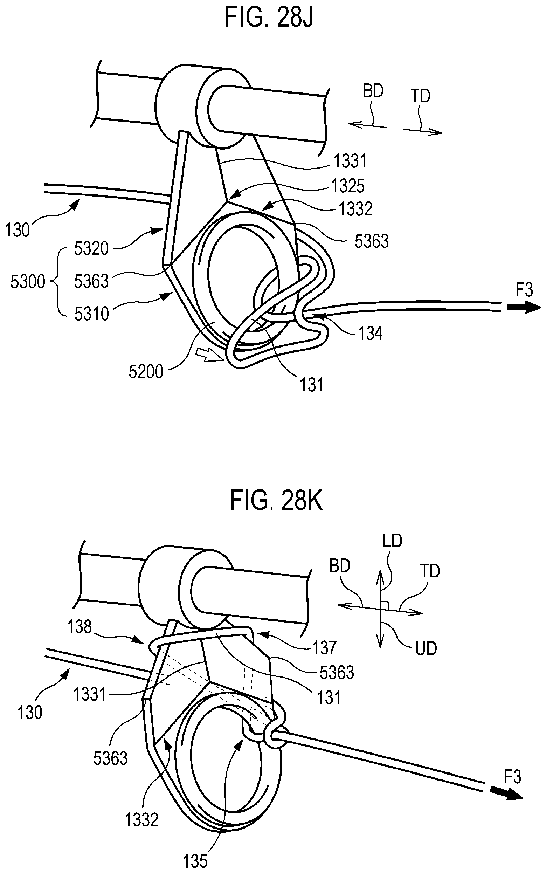

FIG. 28J shows an example where the line tangle is untangled in the fishing line guide shown in FIG. 25.
FIG. 28K shows a fishing line guide according to a comparative example in which the line tangle cannot be untangled.

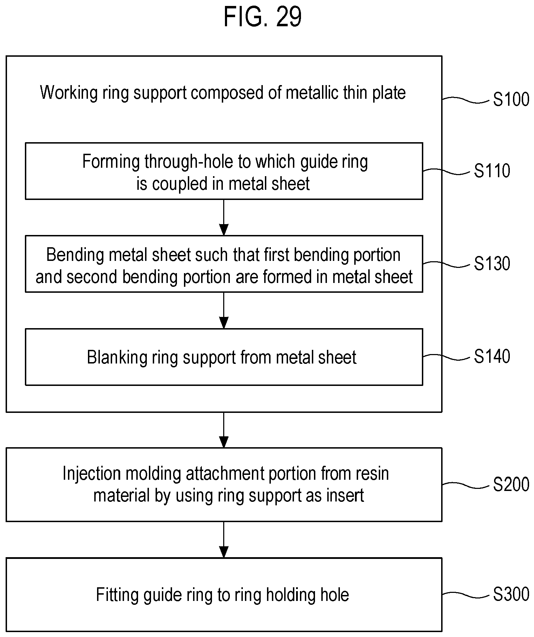

FIG. 29 is a block diagram showing steps of a method of manufacturing a fishing line guide according to a first embodiment of the present disclosure.

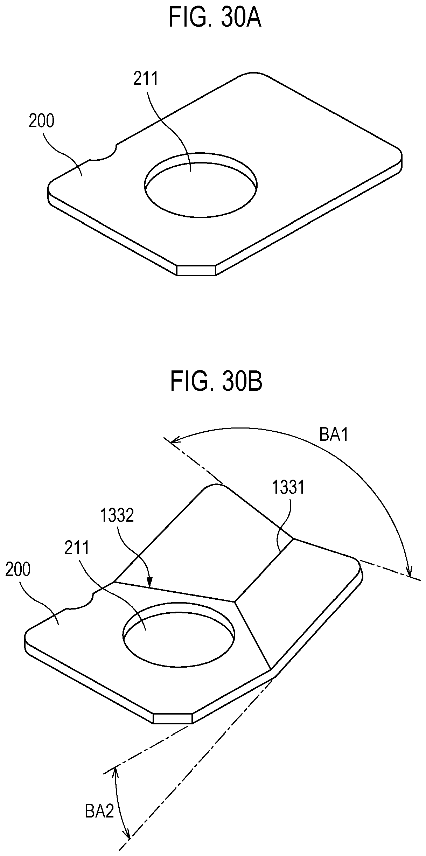

FIG. 30A shows a concrete example performed at the step shown in FIG. 29.
FIG. 30B shows a concrete example performed at the step shown in FIG. 29.

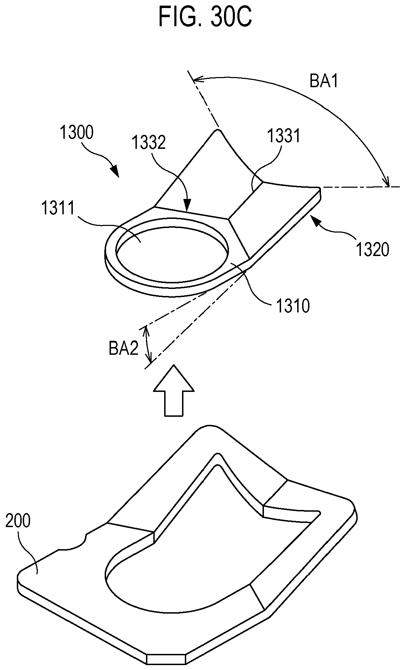

FIG. 30C shows a concrete example performed at the step shown in FIG. 29.

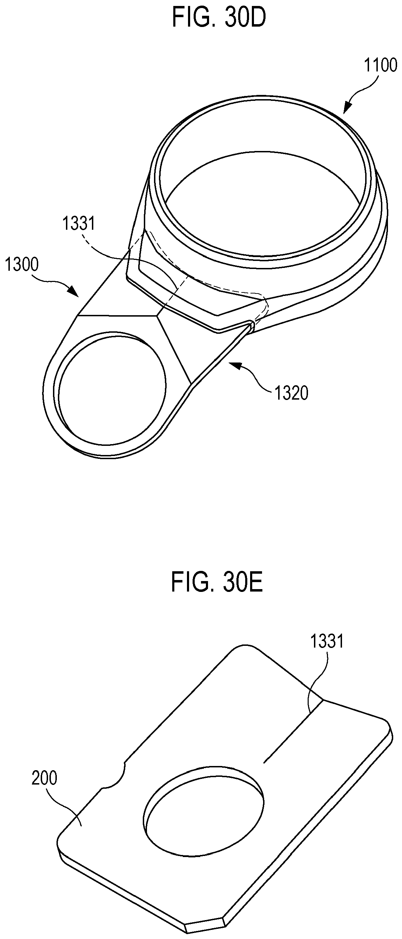

FIG. 30D shows a concrete example performed at the step shown in FIG. 29.
FIG. 30E shows a concrete example performed at the step shown in FIG. 29.

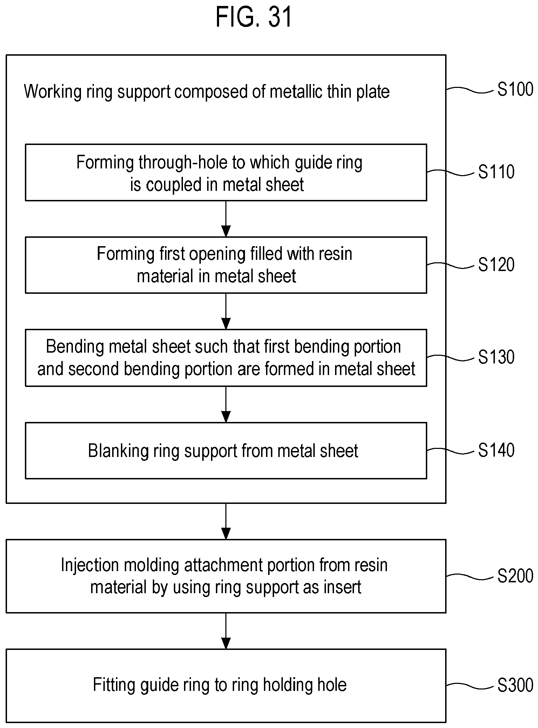

FIG. 31 is a block diagram showing steps of a method of manufacturing a fishing line guide according to a second embodiment of the present disclosure.

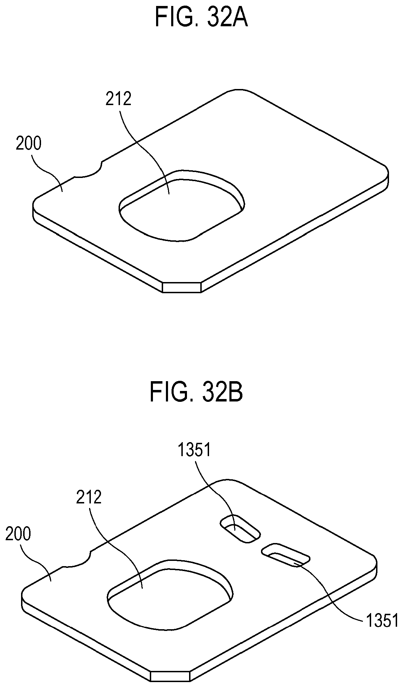

FIG. 32A shows a concrete example performed at the step shown in FIG. 31.
FIG. 32B shows a concrete example performed at the step shown in FIG. 31.

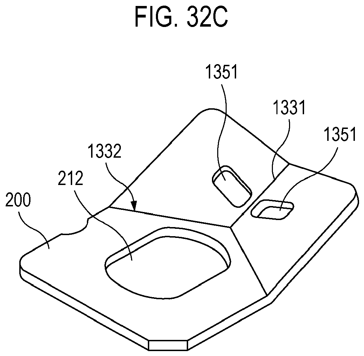

FIG. 32C shows a concrete example performed at the step shown in FIG. 31.

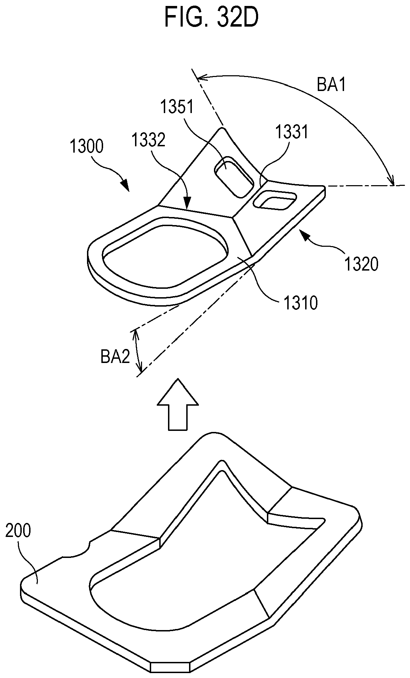

FIG. 32D shows a concrete example performed at the step shown in FIG. 31.

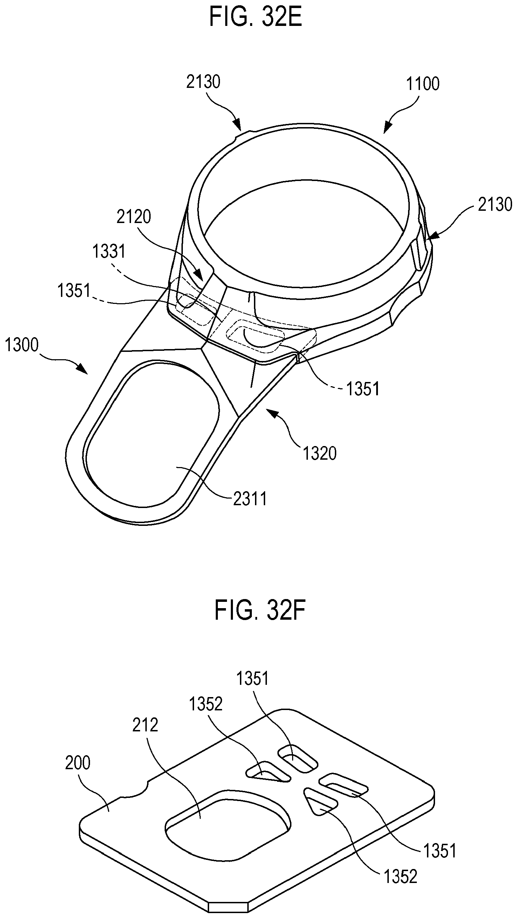

FIG. 32E shows a concrete example performed at the step shown in FIG. 31.
FIG. 32F shows a concrete example performed at the step shown in FIG. 31.

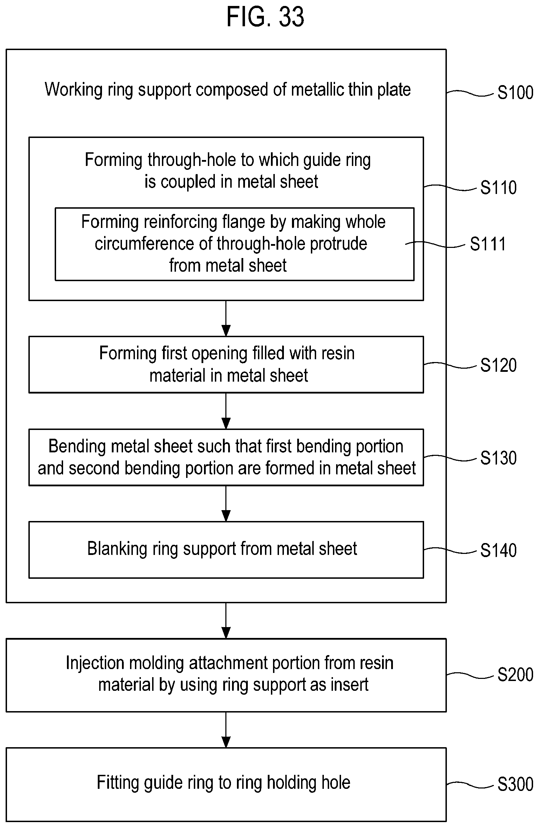

FIG. 33 is a block diagram showing steps of a method of manufacturing a fishing line guide according to a third embodiment of the present disclosure.

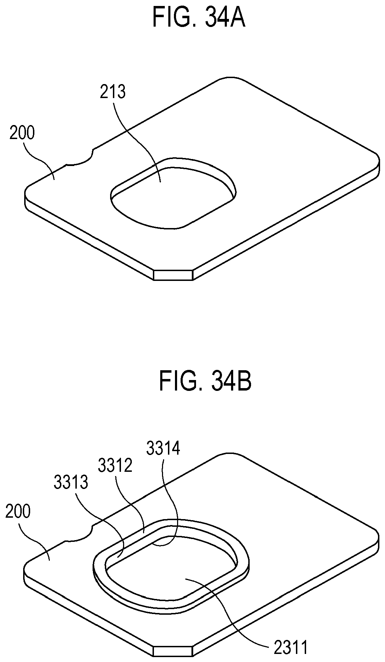

FIG. 34A shows a concrete example performed at the step shown in FIG. 33.
FIG. 34B shows a concrete example performed at the step shown in FIG. 33.

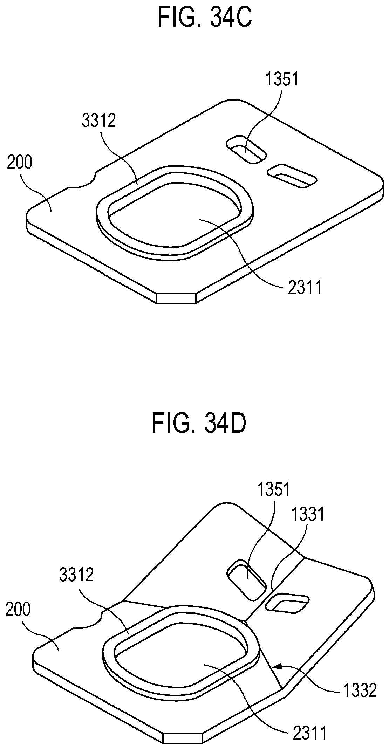

FIG. 34C shows a concrete example performed at the step shown in FIG. 33.
FIG. 34D shows a concrete example performed at the step shown in FIG. 33.

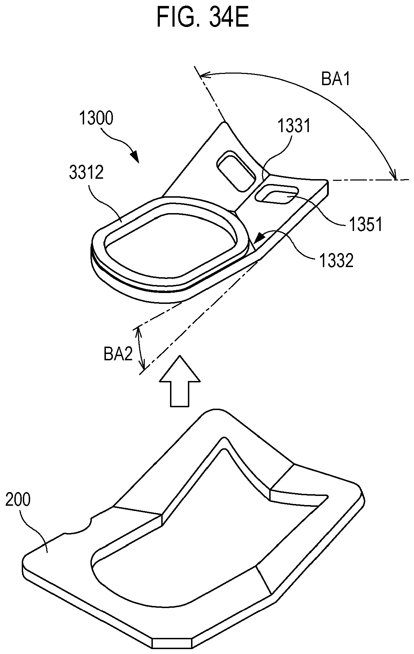

FIG. 34E shows a concrete example performed at the step shown in FIG. 33.

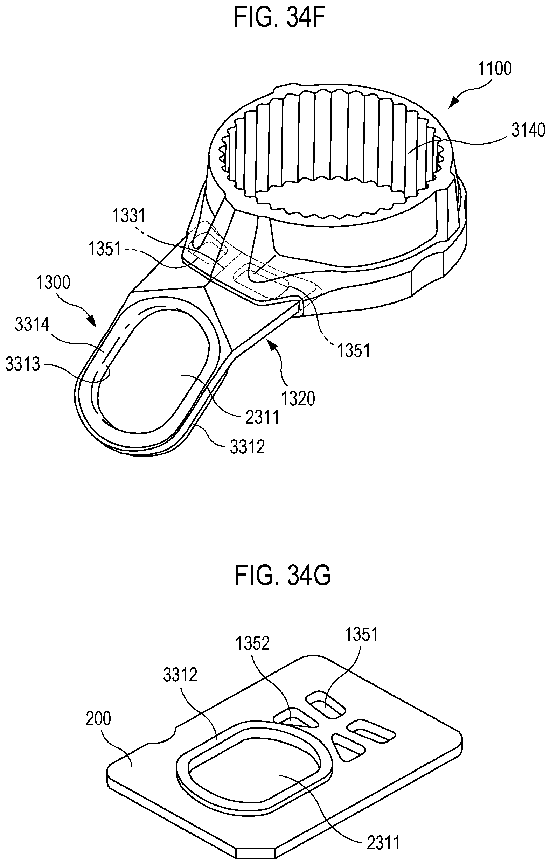

FIG. 34F shows a concrete example performed at the step shown in FIG. 33.
FIG. 34G shows a concrete example performed at the step shown in FIG. 33.

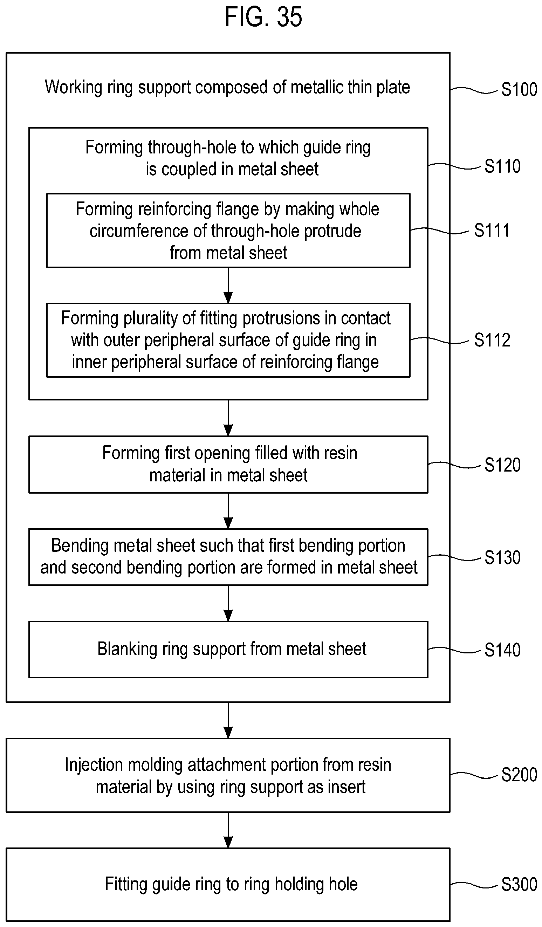

FIG. 35 is a block diagram showing steps of a method of manufacturing a fishing line guide according to a fourth embodiment of the present disclosure.

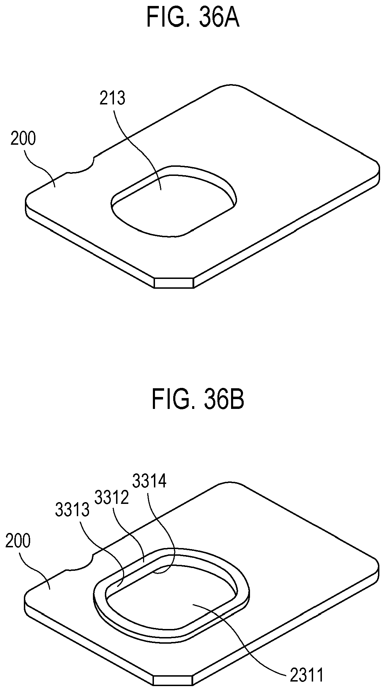

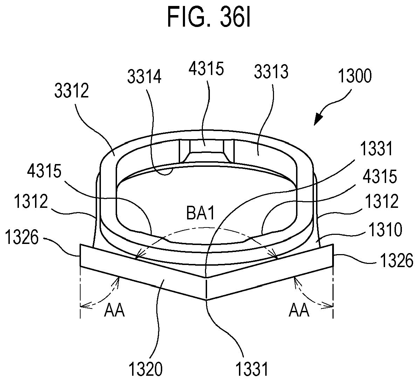

FIG. 36A shows a concrete example performed at the step shown in FIG. 35.
FIG. 36B shows a concrete example performed at the step shown in FIG. 35.

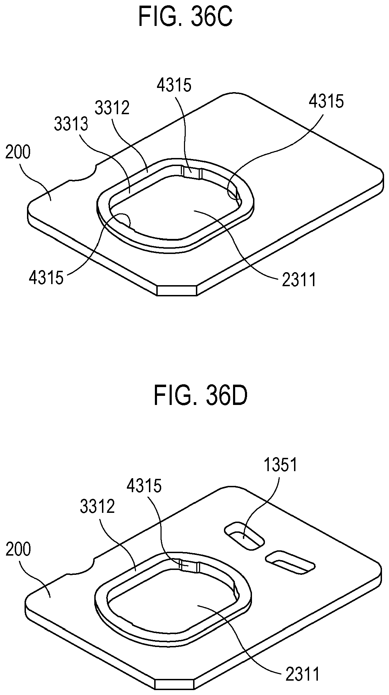

FIG. 36C shows a concrete example performed at the step shown in FIG. 35.
FIG. 36D shows a concrete example performed at the step shown in FIG. 35.

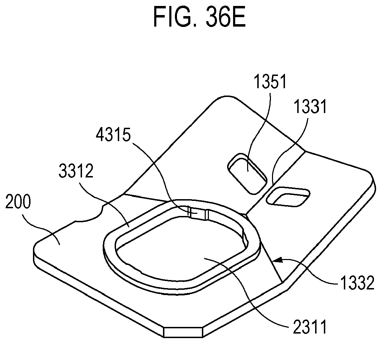

FIG. 36E shows a concrete example performed at the step shown in FIG. 35.

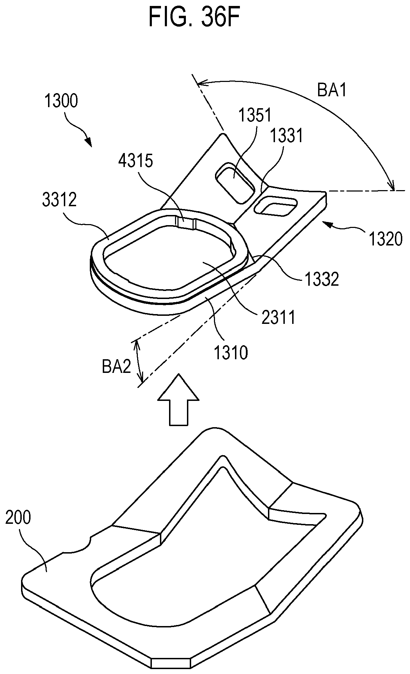

FIG. 36F shows a concrete example performed at the step shown in FIG. 35.

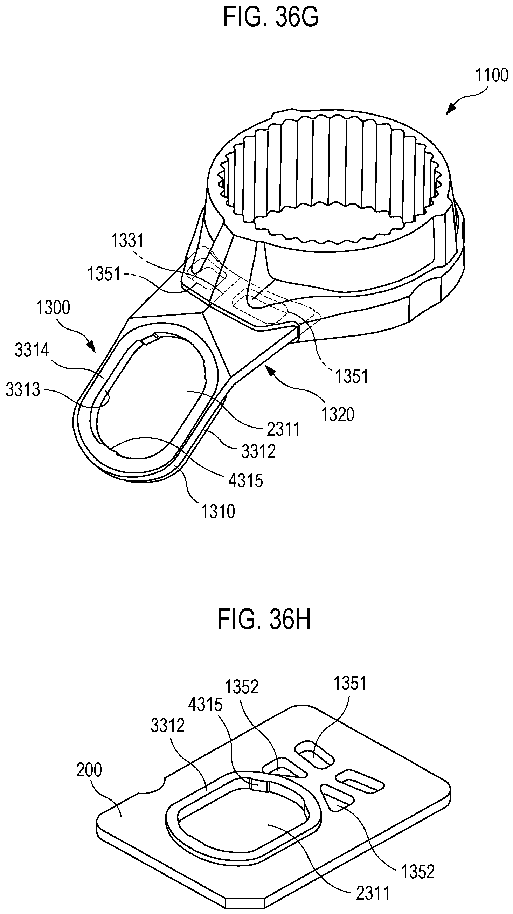

FIG. 36G shows a concrete example performed at the step shown in FIG. 35.
FIG. 36H shows a concrete example performed at the step shown in FIG. 35.
FIG. 361 shows a concrete example performed at the step shown in FIG. 35.

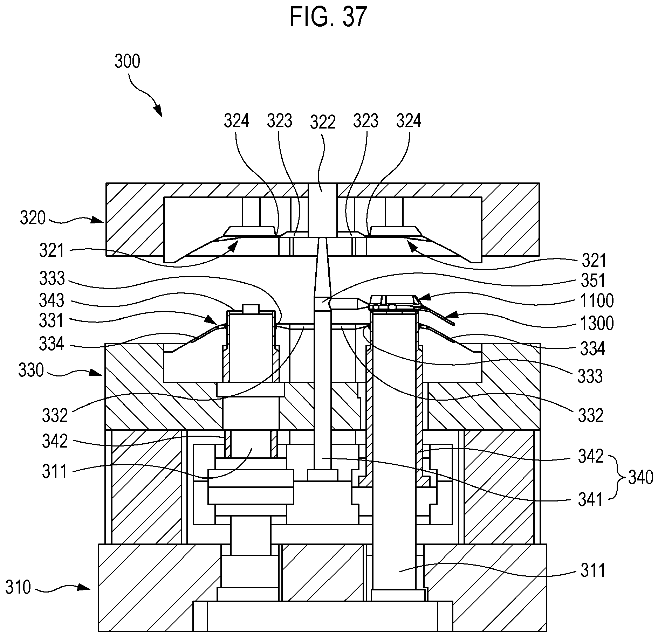

FIG. 37 schematically shows an injection molding apparatus for use in manufacturing a fishing line guide.

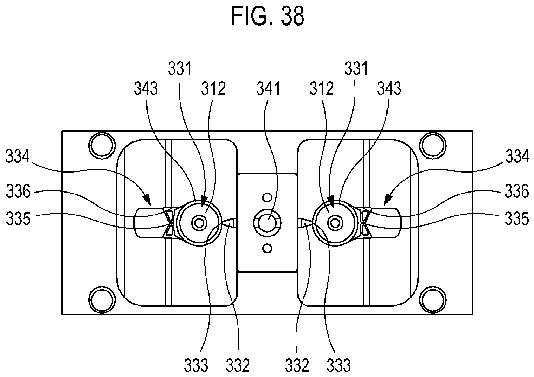

FIG. 38 is a plan view showing a lower die shown in FIG. 37.

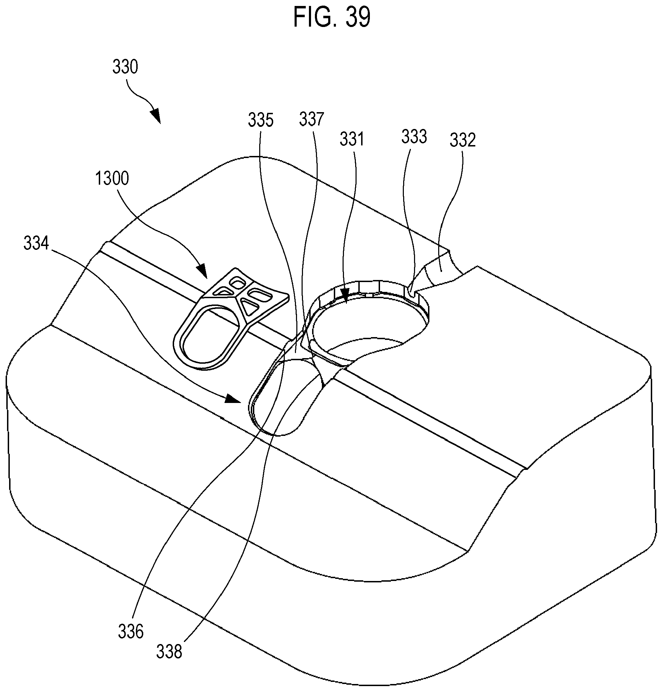

FIG. 39 is a perspective view showing a portion of the lower die shown in FIG. 37.

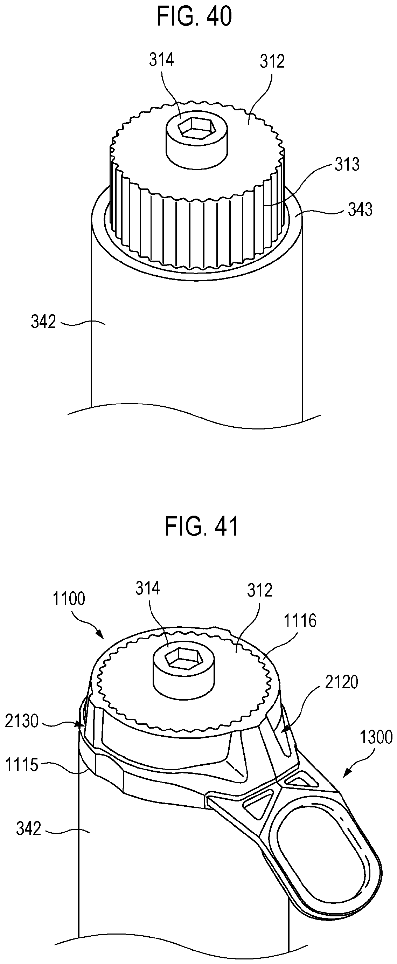

FIG. 40 is a perspective view showing a core pin and an ejector sleeve.
FIG. 41 is a perspective view showing the core pin, the ejector sleeve, and an injection-molded attachment portion.

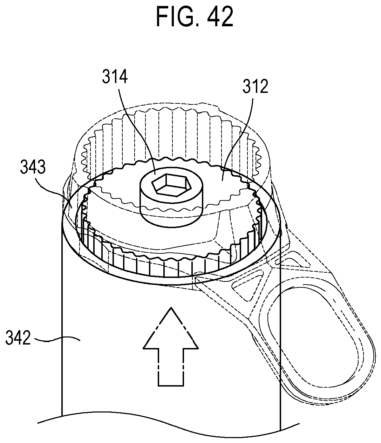

FIG. 42 illustrates an ejecting operation performed by the ejector sleeve.

### MODES FOR CARRYING OUT THE INVENTION

Embodiments of the present disclosure are illustrated for the purpose of explaining the technical idea of the present disclosure. The scope of the rights according to the present disclosure is not limited to the embodiments presented below or the detailed descriptions of such embodiments.

All the technical terms and scientific terms in the present disclosure include meanings or definitions that are commonly understood by those of ordinary skill in the art unless otherwise defined. All terms in the present disclosure are selected for the purpose of describing the present disclosure more clearly, and are not selected to limit the scope of the present disclosure.

As used in the present disclosure, expressions such as "comprising", "including", "having", and the like are to be understood as open-ended terms having the possibility of encompassing other embodiments, unless otherwise mentioned in the phrase or sentence containing such expressions.

The singular expressions that are described in the present disclosure may have a plural meaning unless otherwise stated, which will be also applied to the singular expressions recited in the claims.

The expressions, such as "first," "second," etc., which are used in the present disclosure, are used to separate a plurality of elements, and are not intended to limit an order or importance of the elements.

In the present disclosure, the description that one element is "connected," or "coupled" to another element should be understood to indicate that one element may be directly connected, or coupled, to another element, or that one element may be connected, or coupled, to another element via a new element.

The direction indication term "frontward," "front" or the like used in the present disclosure means a direction toward a tip of a fishing rod, while the direction indication term "rearward, " "rear" or the like means a direction toward a butt of a fishing rod. Further, the direction indication term "upward, " "upper" or the like used in the present disclosure is based on a direction in which a guide ring is positioned with respect to an attachment portion, while the direction indication term "downward," "lower" or the like means a direction opposite to the upward or upper direction.

Descriptions are made hereinafter as to the embodiments with reference to the accompanying drawings. Like reference symbols in the accompanying drawings denote like or corresponding elements. Further, in the following descriptions on the embodiments, duplicate descriptions for the same or corresponding elements may be omitted. However, even if the descriptions of the elements are omitted, such elements are not intended to be excluded in any embodiment. Further, the disclosed embodiments of a manufacturing method may include some or all of the steps shown in the drawings. The steps shown in the drawings may be sequentially performed. At least two or more steps among the steps shown in the drawings may be simultaneously performed. One step among the steps shown in the drawings may be performed depending upon another step.

The embodiments described below and the examples shown in the drawings relate to a fishing line guide that has a guide ring for guiding a fishing line and is attached to a tubular rod of a fishing rod, and to a method of manufacturing such a fishing line guide, and to an injection molding apparatus for use in manufacturing such a fishing line guide. The fishing line guides according to the embodiments may be manufactured by one of the embodiments of the manufacturing method disclosed herein, but the fishing line guides according to the embodiments are not intended to be necessarily manufactured by one of the disclosed embodiments of the manufacturing method.

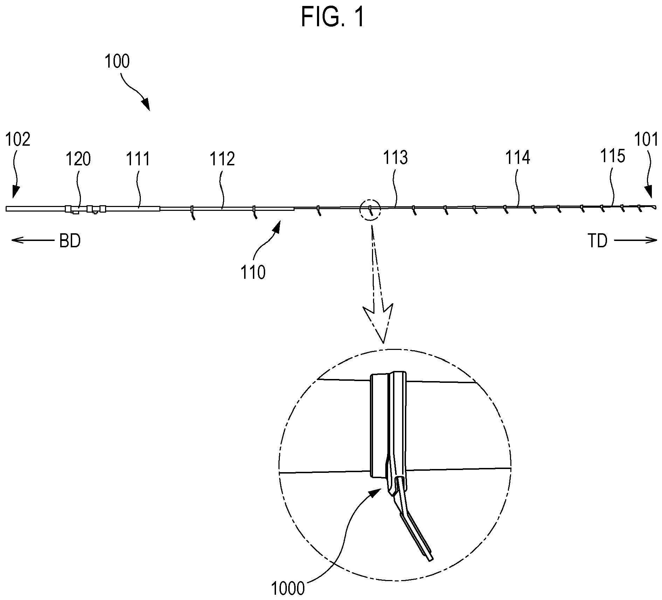

FIG. 1 shows an example of a fishing rod including a fishing line guide according to an embodiment of the present disclosure. In FIG. 1, an arrow TD indicates a frontward direction toward a tip 101 of the fishing rod, while an arrow BD indicates a rearward direction toward a butt 102 of the fishing rod. The fishing rod 100 shown in FIG. 1 may be referred to as a telescopic fishing rod in the art. The fishing rod 100 shown in FIG. 1 may be used for fishing on a waterside, a seashore, a boat, a seashore rock, or the like, but the places where the fishing rod 100 may be used are not limited to the aforementioned places.

Referring to FIG. 1, the fishing rod 100 includes a long cylindrical rod body 110. The rod body 110 serves as a structure which resists various external forces acting on the fishing rod 100 and maintains the shape of the fishing rod 100. The rod body 110 includes a plurality of tubular rods 111, 112, 113, 114, 115. A plurality of tubular rods are coupled to one another in such a telescopic manner that one tubular rod is inserted into another tubular rod located next to said one tubular rod and having an outer diameter greater than that of said one tubular rod, thereby constituting the rod body 110. FIG. 1 shows the extended rod body 110 of the fishing rod 100. The tubular rod 111, which is located at a rear end of the fishing rod 100 among the tubular rods of the rod body 110, serves as a base rod which a user can grip. A reel seat 120 is attached to the tubular rod 111, and a reel (not shown) for reeling out or winding a fishing line (not shown) is detachably attached to the reel seat 120.

The fishing rod 100 includes a plurality of fishing line guides at the rod body 110. The fishing line guides guide a fishing line which is reeled out from the reel when a fishing rig is cast, or which is wound around the reel when a fish is landed. One or more fishing line guides according to any one of the embodiments may be used as the plurality of fishing line guides. One or more fishing line guides according to any one embodiment may be attached to one of the tubular rods 111, 112, 113, 114, 115 of the rod body 110.

As shown in FIG. 1, the tubular rod 113 of the rod body 110 passes through an annular attachment portion of a fishing line guide 1000, and therefore the fishing line guide 1000 is attached to the rod body 110. Before the fishing line guide 1000 is attached to the rod body 110, the fishing line guide 1000 can be slid in a frontward direction TD or a rearward direction BD along the rod body 110 at the attachment portion thereof, and can be rotated about the rod body 110. The tubular rod 113 of the rod body 110 has a tapering shape whose outer diameter gradually decreases in the frontward direction TD. Accordingly, as the fishing line guide 1000 is moved in the rearward direction BD, the attachment portion of the fishing line guide 1000 is coupled to an outer peripheral surface of the tubular rod 113 with interference fit, and thus the fishing line guide 1000 may be attached to the rod body 110. The fishing line guide according to the embodiments may be referred to as a "movable guide" or a "sliding guide" in the art.

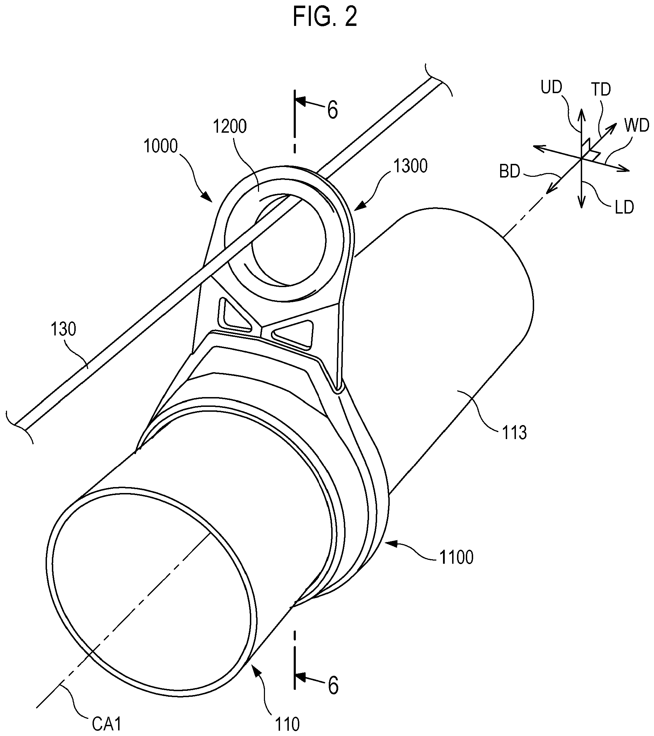

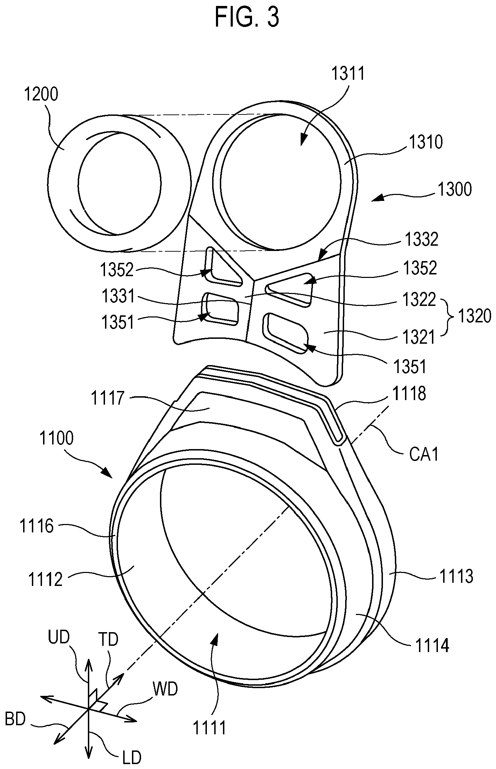

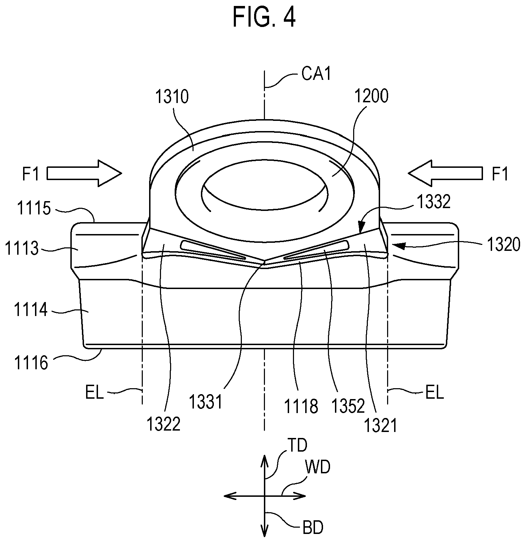

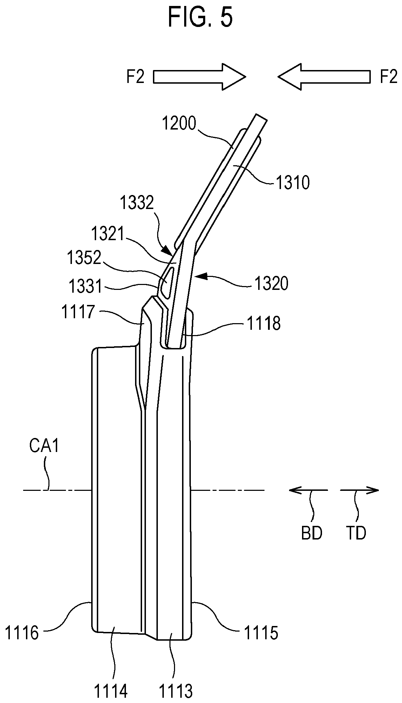

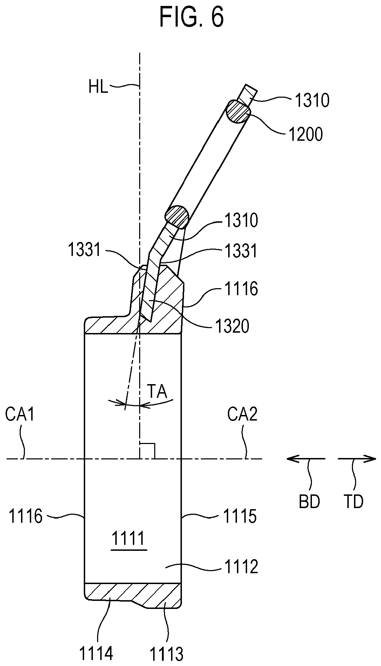

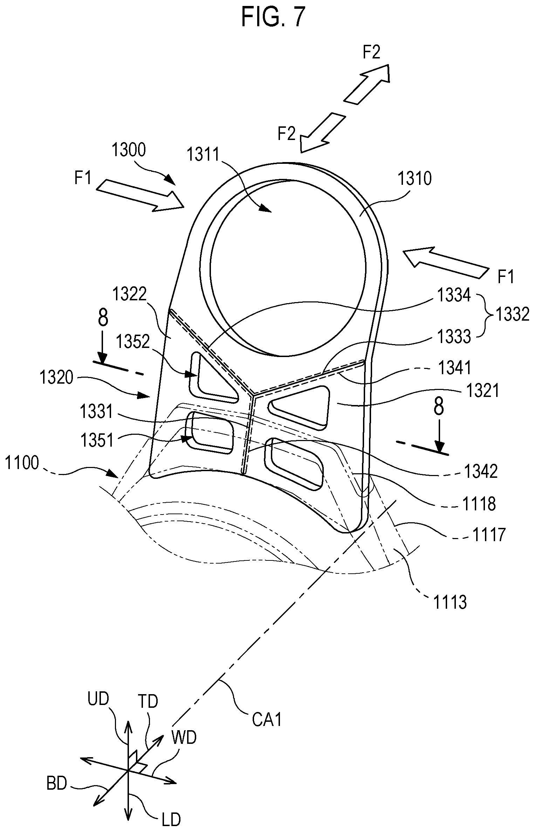

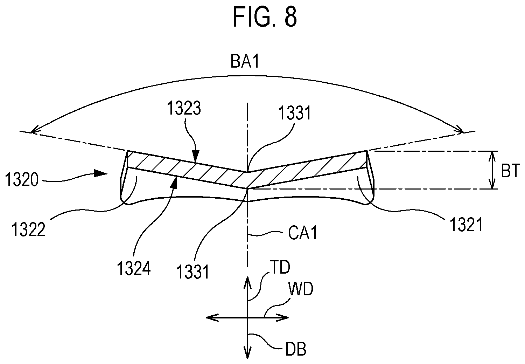

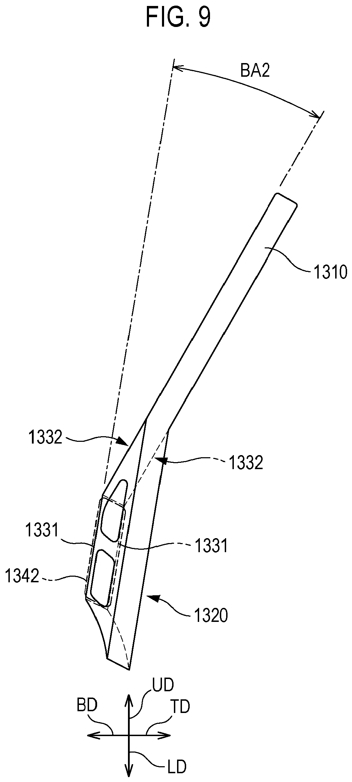

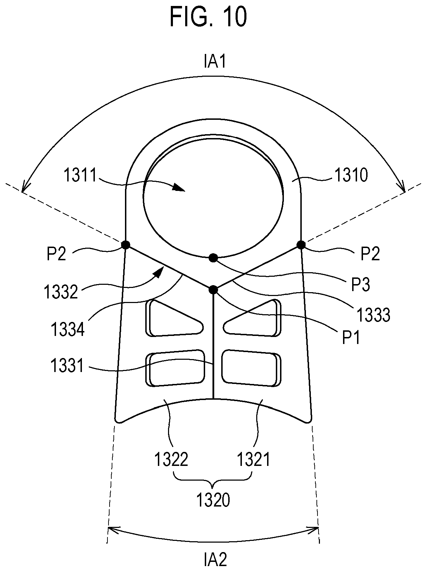

Reference is made to examples shown in FIGS. 2 to 10 to describe the fishing line guide according to a first embodiment of the present disclosure. FIG. 2 is a perspective view showing a fishing line guide according to the first embodiment. FIG. 3 is an exploded perspective view of the fishing line guide shown in FIG. 2. FIG. 4 is a plan view of the fishing line guide shown in FIG. 2. FIG. 5 is a right side view of the fishing line guide shown in FIG. 2. FIG. 6 is a sectional view of the fishing line guide which is taken along the line 6-6 of FIG. 2. FIG. 7 is a perspective view showing a ring support shown in FIG. 3. FIG. 8 is a sectional view of the ring support which is taken along the line 8-8 of FIG. 7. FIGS. 9 and 10 are a right side view and a rear view of the ring support shown in FIG. 7, respectively.

Referring to FIG. 2, the fishing line guide 1000 includes: an attachment portion 1100 attached to the rod body 110 of the fishing rod (specifically, one of the tubular rods constituting the rod body 110); a guide ring 1200 through which a fishing line 130 passes; and a ring support 1300 which holds and supports the guide ring 1200 and is partially coupled to the attachment portion 1100.

In an embodiment, the attachment portion 1100 may be formed through insert injection molding that uses the ring support 1300 as an insert and uses a resin material as an injection material. Therefore, the attachment portion 1100 is composed of a hardened resin material, and the ring support 1300 is partially and integrally coupled to the attachment portion 1100. Said hardened resin material may include a carbon fiber reinforced resin material. More specifically, said hardened resin material may include a carbon long fiber reinforced resin material.

As shown in FIGS. 2 and 3, the attachment portion 1100 is formed as an annular body having an annular shape, and one of the tubular rods of the rod body 110 (e.g., the tubular rod 113) can pass through the attachment portion 1100. A bore 1111, through which the tubular rod 113 passes, is perforated through the attachment portion 1100 along a central axis CA1 of the fishing rod. Therefore, the attachment portion 1100 has an inner peripheral surface 1112 to which an outer peripheral surface of the tubular rod 113 is fitted, and the inner peripheral surface 1112 becomes a surface of the bore 1111. A diameter of the bore 1111 may be uniform in the frontward direction TD or in the rearward direction BD. In the state where the tubular rod 113 passes through the bore 1111, the attachment portion 1100 can be slid along the tubular rod 113 and can be rotated about the tubular rod 113. The tubular rod 113 has a tapering shape that becomes gradually thinner in the frontward direction TD. Accordingly, while the attachment portion 1100 is moved in the rearward direction BD, the attachment portion 1100 can be fitted to the outer peripheral surface of the tubular rod 113 at a location where the outer diameter of the tubular rod 113 and the diameter of the inner peripheral surface 1112 are approximately equal to each other. Then, if the attachment portion 1100 is moved further in the rearward direction BD, the attachment portion 1100 is slightly deformed and, at the same time, the attachment portion 1100 can be firmly fitted and fixed to the tubular rod 113.

In an embodiment, as shown in FIGS. 3 and 4, the attachment portion 1100 has a large outer diameter portion 1113 and a small outer diameter portion 1114. The large outer diameter portion is located in the frontward direction TD and has a relatively large outer diameter. The small outer diameter portion is located in the rearward direction BD and has an outer diameter smaller than that of the large outer diameter portion 1113. The small outer diameter portion connects with the large outer diameter portion 1113. A radial thickness of the attachment portion 1100 at the large outer diameter portion 1113 is greater than a radial thickness of the attachment portion 1100 at the small outer diameter portion 1114. As shown in FIG. 4, a surface of the large outer diameter portion 1113 in the frontward direction TD defines an annular front end surface 1115 of the attachment portion 1100, and a surface of the small outer diameter portion 1114 in the rearward direction BD defines an annular rear end surface 1116 of the attachment portion 1100.

In an embodiment, as shown in FIG. 3, a coupling portion 1117, which extends throughout a portion of a circumference of the large outer diameter portion 1113 and protrudes in a radially outward direction, is formed in the large outer diameter portion 1113. A coupling opening 1118, which is a boundary between the coupling portion 1117 and the ring support 1300, is formed in an outer surface of the coupling portion 1117. A lower portion of the ring support 1300 is embedded in the coupling portion 1117 of the large outer diameter portion 1113 and therefore the ring support 1300 is partially coupled to the large outer diameter portion 1113.

As shown in FIGS. 2 and 3, the guide ring 1200 has an approximately circular ring shape. The fishing line 130 may come into contact with an inner peripheral surface of the guide ring 1200. The guide ring 1200 may be coupled to the ring support 1300 through fitting and application of an adhesive. The guide ring 1200 may be composed of a ceramic material.

As shown in FIGS. 2 and 3, the ring support 1300 holds the guide ring 1200 and supports the guide ring 1200 with respect to the attachment portion 1100. In an embodiment, the ring support 1300 is composed of a thin plate that is manufactured from a metallic material such as stainless steel, stainless alloy, titanium alloy, pure titanium, etc. The ring support 1300 is formed as the thin plate in which portions constituting the ring support 1300 are bent or curved with respect to one another by a bending portion formed in the ring support. Further, the ring support 1300 may be formed by working a thin metal sheet (such a metal sheet may be referred to as a blank in the art), which is made of one of the aforementioned metallic materials, into said thin plate of the ring support 1300 through press working such as punching, blanking, or bending.

In an embodiment, the ring support 1300 comprises: a ring holding portion 1310 that holds the guide ring 1200; and a ring supporting portion 1320 that supports the guide ring 1200 through the ring holding portion 1310. In the thin plate constituting the ring support 1300, the ring supporting portion 1320 is integrally formed with the ring holding portion 1310. As shown in FIGS. 2 and 3, the ring support 1300 is positioned with respect to the outer peripheral surface of the tubular rod 113 by the attachment portion 1100. The ring support 1300 is partially coupled to the attachment portion 1100 in such a manner that a lower portion of the ring support 1300 is partially embedded in the attachment portion 1100. For example, the ring support 1300 is disposed in a molding die for molding the attachment portion 1100 as an insert so that the lower portion of the ring supporting portion 1320 is inserted into the molding die, and then the attachment portion 1100 is injection molded from the resin material composing the attachment portion 1100 (e.g., the carbon long fiber reinforced resin material). Therefore, the ring support 1300 is partially coupled to the attachment portion 1100 while the lower portion of the ring supporting portion 1320 is embedded in the coupling portion 1117 of the attachment portion 1100.

As shown in FIG. 3, the ring holding portion 1310 has a ring holding hole 1311 to which the guide ring 1200 is coupled. The ring holding hole 1311 is perforated through the ring holding portion 1310 in a thickness direction of the ring holding portion 1310. The ring holding hole 1311 has a circular inner peripheral surface so as to fit with the outer peripheral surface of the guide ring 1200. The guide ring 1200 is fitted, at the outer peripheral surface thereof, to the inner peripheral surface of the ring holding hole 1311, and may be coupled to the inner peripheral surface of the ring holding hole 1311 by point contact or surface contact. Further, an adhesive for bonding the inner peripheral surface of the ring holding hole 1311 and the outer peripheral surface of the guide ring 1200 may be applied between the inner peripheral surface of the ring holding hole 1311 and the outer peripheral surface of the guide ring 1200. The ring holding portion 1310 has an approximately annular shape so as to hold the guide ring 1200 along the whole circumference of the guide ring 1200 by the ring holding hole 1311.

As shown in FIG. 3, an upper edge of the ring holding portion 1310 may have a semicircular shape or an approximately semicircular shape. When assuming a width direction WD of the fishing line guide that is perpendicular to both the frontward direction TD and an upward direction UD, lateral end edges of the ring holding portion 1310 in the width direction WD may be parallel with or almost parallel with each other. Alternatively, the lateral end edges of the ring holding portion 1310 in the width direction WD may become close to each other in the upward direction UD A lower end edge of the ring holding portion 1310 has a V shape that is convex in a downward direction LD, and the ring holding portion 1310 is integrally connected to the ring supporting portion 1320 at the lower end edge thereof. Therefore, the ring support 1300 does not include an opening or a cavity between the ring holding portion 1310 and the ring supporting portion 1320. To correspond to the shape of the lower end edge of the ring holding portion 1310, an upper end edge of the ring supporting portion 1320 has a V shape that is convex in the downward direction LD. The ring supporting portion 1320 is integrally connected to the ring holding portion 1310 at the upper end edge thereof.

As shown in FIGS. 2 and 3, the ring supporting portion 1320 is embedded in the attachment portion 1100 at the lower portion thereof. Lateral end edges of the ring supporting portion 1320 in the width direction WD may become close to each other in the upward direction UD Alternatively, the lateral end edges of the ring supporting portion 1320 in the width direction WD may be parallel with each other. A lower end edge of the ring supporting portion 1320 has a circular arc shape that is convex in the upward direction UD As shown in FIG. 4, both lateral surfaces of the ring supporting portion 1320 in the width direction WD are parallel with each other, and also are parallel with the central axis CA1 of the fishing rod. That is, imaginary extension lines EL, which respectively extend from the lateral surfaces of the ring supporting portion 1320 in parallel with the lateral surfaces, are parallel with the central axis CA1.

In an embodiment, the ring support 1300 has a first bending portion 1331 that is formed in the ring supporting portion 1320. The first bending portion 1331 is positioned at a center or approximately the center of the ring supporting portion 1320 in the width direction WD. The ring supporting portion 1320 may be bent with reference to the first bending portion 1331 in a direction toward the tip of the fishing rod (e.g., the frontward direction TD) or in a direction toward the butt of the fishing rod (e.g., the rearward direction BD).

In this embodiment, the ring supporting portion 1320 is bent with reference to the first bending portion 1331 in the direction toward the tip of the fishing rod (e.g., the frontward direction TD). Therefore, as shown in FIG. 3, the ring supporting portion 1320 has a right half portion 1321 and a left half portion 1322 that have a symmetrical shape. The right half portion 1321 and the left half portion 1322 are integrally formed via the first bending portion 1331, and are inclined in the frontward direction TD so as to face toward each other.

As shown in FIGS. 3 and 4, the first bending portion 1331 extends to a lower end of the ring supporting portion 1320 in the downward direction LD toward the tubular rod 113 or passes through the center of the bore 1111, and an upper end of the first bending portion 1331 is positioned outside the coupling portion 1117. Further, a spacing between both ends of the lower edge of the ring supporting portion 1320 in the width direction WD is smaller than the diameter of the bore 1111 of the attachment portion 1100, and the both ends of the lower end edge of the ring supporting portion 1320 are positioned in the coupling portion 1117 of the attachment portion 1100.

In an embodiment, referring to FIGS. 2 and 3, the lower portion of the ring support 1300, which is embedded in the attachment portion 1100, is the lower portion of the ring supporting portion 1320 including a lower portion of the first bending portion 1331. Such a lower portion of the ring support 1300 is embedded in the coupling portion 1117 of the large outer diameter portion 1113.

In an embodiment, as shown in FIG. 3, the ring support 1300 has a second bending portion 1332 that is a boundary between the ring holding portion 1310 and the ring supporting portion 1320. The second bending portion 1332 is connected to the first bending portion 1331 approximately at a center thereof. The ring holding portion 1310 may be bent with respect to the ring supporting portion 1320 with reference to the second bending portion 1332 in a direction toward the tip of the fishing rod (e.g., the frontward direction TD) or in a direction toward the butt of the fishing rod (e.g., the rearward direction BD). In this embodiment, the ring holding portion 1310 is bent with reference to the second bending portion 1332 in the direction toward the tip of the fishing rod (e.g., the frontward direction TD).

In an embodiment, as shown in FIG. 3, the ring support 1300 has a pair of first openings 1351 that are formed in the right half portion 1321 and the left half portion 1322 of the ring supporting portion 1320 respectively. The first openings 1351 are formed to be perforated through the ring supporting portion 1320 in the thickness direction along the central axis CA1 of the fishing rod, and are formed to be symmetrical with respect to the first bending portion 1331. Further, the first openings 1351 are located in the ring supporting portion 1320 inside the coupling portion 1117 of the attachment portion 1100. During the insert injection molding, the resin material composing the attachment portion 1100 flows into the first openings 1351 and is hardened in the first openings 1351. That is, the first openings 1351 are filled with the hardened resin material of the attachment portion 1100. Therefore, the coupling structure between the attachment portion 1100 and the ring support 1300 is reinforced and the strength of the fishing line guide 1000 is improved. Further, the ring support 1300 is prevented from being rotated with respect to the coupling portion 1117 of the attachment portion 1100 or being separated from the coupling portion 1117.

In an embodiment, as shown in FIGS. 3 and 4, the ring support 1300 has second openings 1352 that are formed in the right half portion 1321 and the left half portion 1322 of the ring supporting portion 1320 respectively and are located above the first openings 1351. The second openings 1352 are formed to be perforated through the ring supporting portion 1320 in the direction of the central axis CA1 of the fishing rod (in the thickness direction). Due to the second openings 1352, the fishing line guide 1000 can become more lightweight.

The second openings 1352 are formed symmetrically with respect to the first bending portion 1331, and have an approximately triangular shape. The second openings 1352 are located in the ring supporting portion 1320 outside the coupling portion 1117 of the attachment portion 1100. The second openings 1352 are formed only at a portion of the ring supporting portion 1320 located outside the coupling portion 1117, and are not formed at a portion of the ring supporting portion 1320 that is embedded within the coupling portion 1117. The second openings 1352 are formed not to overlap with an upper contour line of the coupling portion 1117, thus achieving the weight reduction of the ring support 1300 in the state where the coupling strength between the attachment portion 1100 and the ring support 1300 is maintained. Further, since each of the second openings 1352 is located not to overlap with the first bending portion 1331 of the ring supporting portion 1320, the strength of the ring supporting portion 1320 is not deteriorated. Further, since the second openings 1352 are located not to overlap with the second bending portion 1332, the bending portion of the ring support 1300 formed by the first bending portion 1331 and the second bending portion 1332 is not broken, and the strength of the ring support 1300 is not deteriorated.

In other embodiment, the ring support 1300 may not have the first opening 1351 and the second opening 1352, or have only one of the first opening 1351 and the second opening 1352. For example, only the first opening 1351 may be formed in the ring support 1300, or only the second opening 1352 may be formed in the ring support 1300.

As shown in FIGS. 5 and 6, in an embodiment, the ring support 1300 is tilted in the frontward direction TD at a tilt angle TA with respect to a vertical line HL that is perpendicular to the central axis CA1 of the fishing rod or a central axis CA2 of the attachment portion 1100.

The fishing line guide according to an embodiment has an improved bending strength of the ring support 1300, an improved rotation prevention strength of the ring support 1300, and an improved attachment strength of the ring support 1300. The bent shape of the ring support 1300 made by the above-described first and second bending portions may be related to such improved strengths. The aforesaid features of the fishing line guide according to an embodiment are described with reference to FIGS. 7 to 10.

The first bending portion and the second bending portion are merely shown in a shape of a simple line in FIGS. 7 to 10. In the embodiments of the fishing line guide, the first bending portion 1331 and the second bending portion 1332 may include portions that are curved at a certain curvature in the metallic thin plate composing the ring support 1300. To provide the ring support 1300 with strength-reinforced structure using the bent shape, the first bending portion 1331 and the second bending portion 1332 may have various widths. In an embodiment, on a front surface 1323 and a rear surface 1324 of the ring support 1300, the first bending portion 1331 may appear as one of the following shapes: a thin line, a narrow surface, a narrow curved surface, and a relatively wide curved surface. Further, when the cross-section of the ring support 1300 is taken, the first bending portion 1331 may appear as a circular arc shape that is convex in the rearward direction BD on the front surface 1323 and the rear surface 1324 of the ring support 1300. The second bending portion 1332 may appear as a thin line shape or a narrow surface shape on the front surface 1323 and the rear surface 1324 of the ring support 1300. When the longitudinal section of the ring support 1300 is taken, the second bending portion 1332 may appear as a circular arc shape that is convex in the rearward direction BD on the front surface 1323 and the rear surface 1324 of the ring support 1300.

As shown in FIG. 7, the ring support 1300 has the first bending portion 1331 which is formed in the ring supporting portion 1320 and divides the ring supporting portion 1320 into the right half portion 1321 and the left half portion 1322. The first bending portion 1331 extends in the ring support 1300 to the lower end of the ring supporting portion 1320 in the downward direction LD toward the central axis CA1 of the fishing rod (or in the downward direction toward the tubular rod to which the fishing line guide is attached). Further, the first bending portion 1331 extends from the central axis CA1 of the fishing rod approximately in the upward direction UD and meets the center of the second bending portion 1332. In an embodiment, as shown in FIG. 8, the ring supporting portion 1320 is bent at a first bending angle BA1 with reference to the first bending portion 1331 in the direction toward the tip of the fishing rod (the frontward direction TD).

As shown in FIG. 7, the ring support 1300 has the second bending portion 1332 which is a boundary between the ring holding portion 1310 and the ring supporting portion 1320 and through which the ring holding portion 1310 is bent. The second bending portion 1332 extends from one lateral end of the ring support 1300 to an opposite lateral end of the ring support 1300, and is convex toward the lower end of the ring support 1300 (the lower end of the ring supporting portion 1320). The ring holding portion 1310 and the ring supporting portion 1320 have a common edge. Therefore, in the ring support 1300, both the lower end edge of the ring holding portion 1310 and the upper end edge of the ring supporting portion 1320 form the second bending portion 1332. In an embodiment, the second bending portion 1332 has a V shape convex in the downward direction LD, and is connected to the upper end of the first bending portion 1331. Further, when the ring support 1300 is viewed from a lateral side, the second bending portion 1332 is inclined in an oblique direction between the frontward direction TD and the upward direction UD In some embodiment, the second bending portion 1332 may have a circular arc shape that is convex in the downward direction LD.

As shown in FIG. 7, the second bending portion 1332 includes a pair of linear bending portions 1333, 1334 that extend from a connection point between the first bending portion 1331 and the second bending portion 1332 (a center point P1 of the second bending portion 1332 shown in FIG. 10) at an obtuse angle with respect to the first bending portion 1331. As shown in FIG. 9, the ring holding portion 1310 is bent with reference to the second bending portion 1332 at a second bending angle BA2 with respect to the ring supporting portion 1320 in the direction toward the tip of the fishing rod (e.g., the frontward direction TD).

In an embodiment, as shown in FIG. 7, the first bending portion 1331 and the second bending portion 1332, which meet each other, form a Y shape, therefore forming a Y-shaped bending portion in the ring support 1300. Accordingly, the ring support 1300 may be formed by press-working the above-described metal sheet (blank) along the first bending portion 1331 and the second bending portion 1332. Specifically, the ring support may be formed through bending working the metal sheet (blank), that is, forming the first and second bending portions 1331, 1332 in the metal sheet, then bending the ring supporting portion 1320 at the first bending angle BA1 with reference to the first bending portion 1331, and thereafter bending the ring holding portion 1310 at the second bending angle BA2 with reference to the second bending portion 1332. Therefore, the ring support 1300 is formed as a metallic thin plate in which the ring holding portion 1310, the right half portion 1321 of the ring supporting portion 1320 and the left half portion 1322 of the ring supporting portion 1320 are bent toward one another. Further, in such a metallic thin plate, the ring holding portion 1310, the right half portion 1321 of the ring supporting portion 1320, and the left half portion 1322 of the ring supporting portion 1320 are integrally formed via the first and second bending portions 1331, 1332 that make the Y-shaped bending portion. And, in such a metallic thin plate, the ring holding portion, the right half portion of the ring supporting portion, and the left half portion of the ring supporting portion are bent toward one another by the first and second bending portions 1331, 1332.

Further, the above-described press-working for the metal sheet may be performed until the metal material composing the metal sheet is work-hardened. Therefore, as shown in FIG. 7, the ring support 1300 includes work-hardened portions 1341, 1342 which said metal material creates by being work-hardened by said press-working. The work-hardened portions 1341, 1342 have a shape corresponding to the Y shape of the first and second bending portions 1331, 1332. The work-hardened portions 1341, 1342 are formed within the ring support 1300 along the first bending portion 1331 and the second bending portion 1332. The work-hardened portions 1341, 1342 have a yield point higher than that of the ring holding portion 1310 and the ring supporting portion 1320 of the ring support 1300. Thus, it is difficult for the ring support 1300 to be plastically deformed at the first and second bending portions 1331, 1332 at which the work-hardened portions 1341, 1342 are created. Accordingly, due to the Y-shaped bending portion made by the first and second bending portions 1331, 1332, the ring support 1300 has a strong resistance against external forces applied to the ring support 1300, and the strength of the ring support 1300 can be reinforced.

As shown in FIG. 8, the ring supporting portion 1320 is bent with reference to the first bending portion 1331 at the first bending angle BA1 in the frontward direction TD. The first bending angle BA1 may be an obtuse angle of 120 degrees to 170 degrees. When the first bending angle BA1 is an obtuse angle, a crosswind-receiving area of the ring supporting portion 1320 can be decreased, and the bending of the fishing rod, which is caused due to a strong crosswind drag force, can be reduced. When the first bending angle BA1 is 120 degrees or more, the influence of a crosswind drag force on the ring supporting portion 1320 can be effectively reduced in the event of a strong crosswind. Further, when the first bending angle BA1 is 120 degrees or more, the area of the ring holding portion 1310, which is bent with respect to the ring supporting portion 1320, can be sufficiently secured in a simple shape. In case where the first bending angle BA1 exceeds 170 degrees, the work-hardening caused by compression may not occur in the first bending portion 1331 during bending the ring supporting portion 1320 with reference to the first bending portion 1331. In such a case, if an external force, which rotates the ring support 1300 about the tubular rod of the fishing rod, acts on the ring support 1300, the bent ring supporting portion 1320 tends to deform into a straight line shape in a vector direction of the external force, and therefore the ring support 1300 may be separated from the attachment portion 1100.

As shown in FIG. 8, a distance BT (the thickness of the bent ring supporting portion) between a front end of the ring supporting portion 1320 (a lateral end edge of the ring supporting portion 1320) and a rear end of the ring supporting portion 1320 (the first bending portion 1331 on the rear surface 1324) may be 0.5mm to 3mm along the central axis CA1. The attachment portion composed of a resin material tends to elastically deform, and may bend or deform because of little stress. In case where the distance BT is less than 0.5mm, when an external force is applied to the ring support 1300 in a direction of rotating the ring support 1300 about the central axis CA1 of the fishing rod (see arrows F1 in FIGS. 4 and 7), the coupling opening 1118 is pushed by the ring supporting portion 1320 and the surface of the coupling opening 1118 may be deformed. Then, a necessary reaction force does not act on the ring support 1300, and therefore the ring supporting portion 1320 may climb over the coupling opening 1118 and then be moved therefrom. In case where the distance BT exceeds 3mm, the ring support 1300 may become excessively bigger, and the weight reduction of the fishing line guide cannot be achieved. Further, a portion of the ring supporting portion 1320, which protrudes from the attachment portion 1100, may be severely influenced by a crosswind, thereby significantly deteriorating a heavy holding feeling of the fishing rod.

As shown in FIG. 9, the ring holding portion 1310 is bent with respect to the ring supporting portion 1320 with reference to the second bending portion 1332 at the second bending angle BA2 in the frontward direction TD. The ring holding portion 1310 is inclined with respect to the ring supporting portion 1320 at the second bending angle BA2 toward the tip of the fishing rod 100 (in the frontward direction TD). The second bending angle BA2 may be 15 degrees to 20 degrees in order to improve the bending strength of the ring support 1300 and smoothly untangle a line tangle.

By a user or an external impact, an external force F1 (see FIGS. 4 and 7), which rotates the ring support 1300 about the tubular rod 113 (about the central axis CA1 of the fishing rod), may be repeatedly applied to the ring support 1300. However, due to the Y-shaped bending portion of the ring support 1300, the ring support 1300 has an improved rotation prevention strength that resists the external force F1 applied to the tubular rod 113 in a transverse direction.

Referring to FIGS. 8 and 9, the ring supporting portion 1320 is bent with reference to the first bending portion 1331 at the first bending angle BA1 in the frontward direction TD toward the tip of the fishing rod. Therefore, the right half portion 1321 and the left half portion 1322 of the ring supporting portion 1320 are located obliquely at an acute angle with respect to the central axis CA1 with reference to the first bending portion 1331 and face toward each other. The ring holding portion 1310 is integrally formed with the ring supporting portion 1320, and is flat. The ring holding portion 1310 is bent with reference to the second bending portion 1332 at the second bending angle BA2 in the frontward direction TD toward the tip of the fishing rod. That is, the ring holding portion 1310 is angularly bent from the ring supporting portion 1320 through the second bending portion 1332. The lower end edge of the ring holding portion 1310 and the upper end edge of the ring supporting portion 1320 are formed as the V-shaped second bending portion 1332. With regard to the V shape of the second bending portion 1332, the linear bending portions 1333, 1334 of the second bending portion 1332 are inclined from the upper end of the first bending portion 1331 toward the upper end of the ring support 1300. That is, the respective upper end edges of the right half portion 1321 and the left half portion 1322 of the ring supporting portion 1320 are inclined in the width direction WD from the center of the ring support 1300 toward the upper end of the ring support 1300. The flat ring holding portion 1310 is connected to the respective upper end edges of the right half portion 1321 and the left half portion 1322 via the second bending portion 1332. As such, the ring support 1300 is provided with the Y-shaped bending portion that is formed by the first bending portion 1331 and the second bending portion 1332. Further, the Y-shaped work-hardened portions 1341, 1342 are formed within the ring support 1300 along the Y-shaped bending portion.

Therefore, although the external force F1 is applied to the ring support 1300, the ring support 1300 strongly resists against being deformed, bent or twisted in a direction in which the right half portion 1321 and the left half portion 1322 of the ring supporting portion 1320 are opened or closed. Further, since the ring support 1300 strongly resists the external force F1 due to the Y-shaped bending portion, the ring support 1300 has an improved rotation prevention strength. Accordingly, the ring supporting portion 1320 is prevented from expanding the coupling opening 1118 of the attachment portion 1100, being rotated about the attachment portion 1100 while climbing over the coupling opening 1118 of the attachment portion 1100, or being separated from the coupling portion 1117 of the attachment portion 1100.

An external force F2 (see FIGS. 5 and 7) may be applied to the ring support 1300 in the frontward direction TD toward the tip of the fishing rod or in the rearward direction BD toward the butt of the fishing rod. For example, the external force F2 may be applied to the ring support 1300 due to a fishing line during fishing or due to an external impact. However, the ring support 1300 has an improved bending strength that resists the external force F2. Due to the Y-shaped bending portion of the ring support 1300, the ring holding portion 1310 is prevented from being deformed or bent in a direction of the external force F2, or the right half portion 1321 and the left half portion 1322 of the ring supporting portion 1320 are prevented from being opened or bent in the direction of the external force F2. As such, the ring support 1300 has an improved bending strength that resists the external force F2.

To improve the bending strength and smoothly untangle the line tangle, each portion of the ring support 1300 may be formed in a specific dimensional range. Referring to FIG. 10, to improve the bending strength and smoothly untangle the line tangle, an included angle IA1 in the V shape of the second bending portion 1332 (i.e., an included angle between the linear bending portions 1333, 1334) may be 110 degrees to 120 degrees. The ring supporting portion 1320 may have a tapering shape such that the lateral end edges of the ring supporting portion 1320 are inclined toward each other. In such a case, to improve the bending strength and smoothly untangle the line tangle, an included angle IA2, which the lateral end edges of the ring supporting portion 1320 form, may have an angle of more than zero degree and less than or equal to 30 degrees. Further, the center point P1 of the second bending portion 1332 is located below both end points P2 of the second bending portion 1332, and a lowermost end point P3 of the ring holding hole 1311 is located below the both end points P2 of the second bending portion 1332, thereby contributing to the smooth untangling of the line tangle.

When the ring support 1300 is formed such that the first bending angle BA1, the second bending angle BA2, the included angle IA1 and the included angle IA2 have angle values within the above-described ranges, the line tangle in the ring support 1300 can be smoothly untangled. Further, the line tangle in the ring support 1300 can be smoothly untangled due to the above-described positional relationship of the center point P1 of the second bending portion 1332, the both end points P2 of the second bending portion 1332, and the lowermost end point P3 of the ring holding hole 1311. That is, when the first bending angle BA1, the second bending angle BA2, the included angle IA1 and the included angle IA2 are selected to have angle values deviating from the above-described ranges, or when the ring holding hole 1311 and the second bending portion 1332 are not positioned with the above-described positional relationship, the untangling of the line tangle cannot be smoothly performed. By way of example in the ring support 1300 of an embodiment, the first bending angle BA1 may be set to 157 degrees, the second bending angle BA2 may be set to 20 degrees, the included angle IA1 may be set to 120 degrees, and the included angle IA2 may be set to 20 degrees.

In the above-described embodiments, the ring support 1300 includes the first bending portion 1331 and the second bending portion 1332 connected to the first bending portion. In other embodiment, the ring support 1300 may include only the first bending portion 1331. In such an embodiment, the ring supporting portion 1320 may be bent with reference to the first bending portion 1331 at the first bending angle BA1 toward the tip of the fishing rod, and the ring holding portion 1310 may extend from the ring supporting portion 1320 without being bent.

In the above-described embodiment, the ring support 1300, which is composed of the metallic thin plate, and the attachment portion 1100, which is composed of the hardened resin material, are integrally coupled to each other through the insert injection molding. Specifically, the ring support 1300 and the attachment portion 1100 are integrally coupled to each other through the injection molding in such a manner that the lower portion of the ring supporting portion 1320 including the lower portion of the first bending portion 1331 and the first openings 1351 is embedded in the coupling portion 1117 of the large outer diameter portion 1113. Therefore, the ring support 1300 is not provided with a connection part such as an attachment ring that is fitted with the attachment portion 1100. Accordingly, when compared with a fishing line guide of a prior art which is configured such that the frame with the attachment ring formed therein is coupled to the attachment portion, the fishing line guide of one embodiment has a remarkably low weight and can achieve the weight reduction.

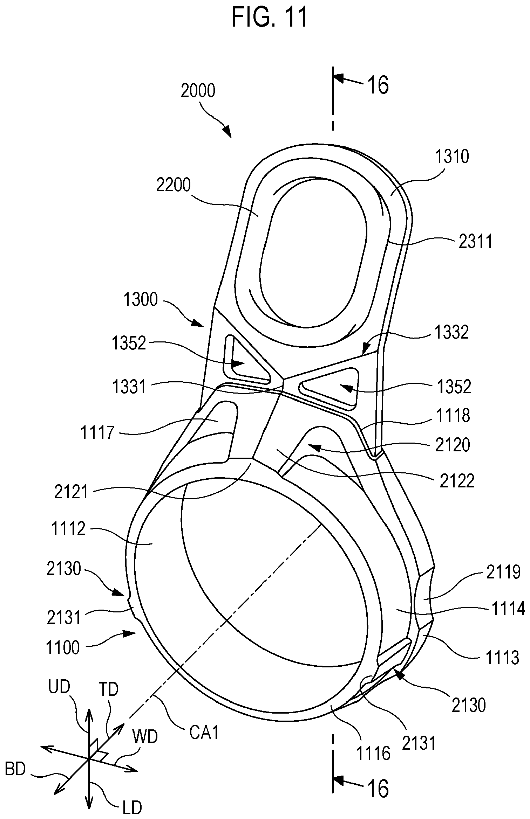

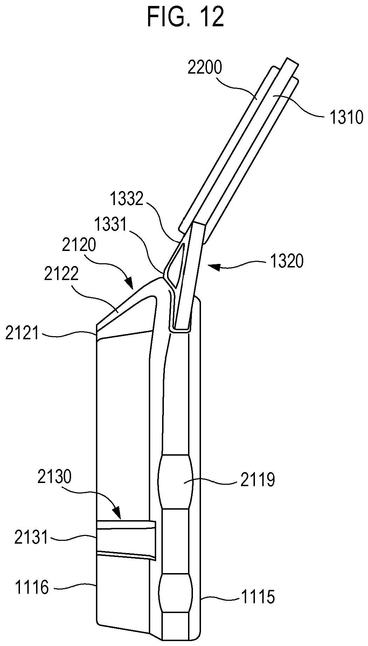

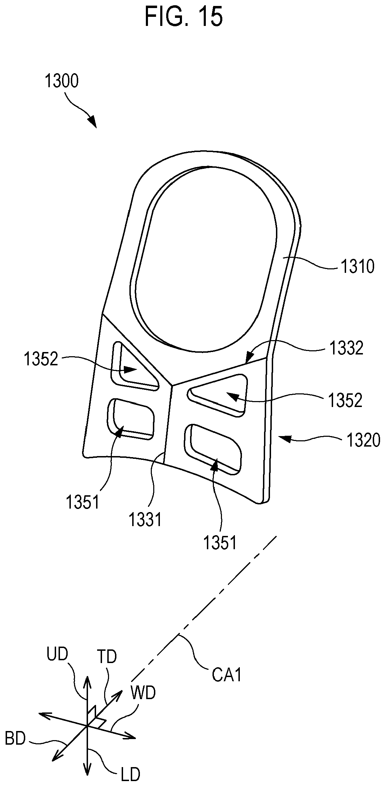

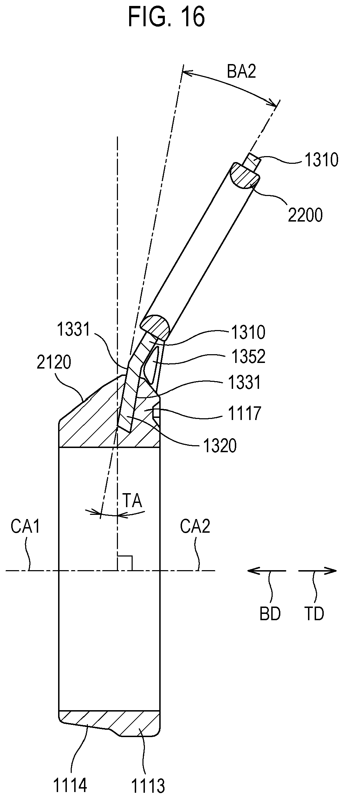

Reference is made to the examples shown in FIGS. 11 to 16 to describe a fishing line guide according to a second embodiment of the present disclosure. FIG. 11 is a perspective view showing a fishing line guide according to the second embodiment. FIGS. 12 to 14 are a right side view, a rear view and a front view of the fishing line guide shown in FIG. 11, respectively. FIG. 15 is a perspective view of a ring support shown in FIG. 11. FIG. 16 is a sectional view taken along the line 16-16 of FIG. 11. The fishing line guide shown in FIGS. 11 to 16 has a configuration similar to that of the fishing line guide 1000 of the above-described embodiment. Hereinafter, descriptions are made only as to different configurations.

As shown in FIG. 11, the guide ring 2200, through which the fishing line passes, has an oblong shape that is long upward and downward. Therefore, the ring holding hole 2311, to which the guide ring 2200 is fitted, has an oblong shape to correspond to the shape of the guide ring 2200. The ring holding portion 1310 is inclined in the frontward direction TD toward the tip of the fishing rod. Thus, when the fishing rod is viewed from the butt of the fishing rod toward the tip of the fishing rod, the inner peripheral surface of the guide ring 2200 has an approximately circular shape. Therefore, a sufficient space for allowing the fishing line to smoothly pass can be secured in the guide ring 2200.

As shown in FIG. 11, the attachment portion 1100 of the fishing line guide 2000 includes, at an outer peripheral surface thereof, three ribs 2120, 2130 that protrude in a radially outward direction. Said three ribs include an upper rib 2120 and a pair of lateral ribs 2130.

The upper rib 2120 is located adjacent to the ring supporting portion 1320 and is located at an upper end of the attachment portion 1100. The upper rib 2120 is formed throughout the coupling portion 1117 and the small outer diameter portion 1114. An upper surface 2122 of the upper rib 2120 is inclined toward the central axis CA1. The upper rib 2120 has a shape that tapers in the rearward direction BD toward the butt of the fishing rod. Therefore, the upper rib 2120 has a width that gradually widens from a rear end surface 2121 in the rearward direction BD along the frontward direction TD toward the tip of the fishing rod.

The pair of lateral ribs 2130 are located below the center of the attachment portion 1100 at a lateral end of the attachment portion 1100. The pair of lateral ribs 2130 are formed throughout the large outer diameter portion 1113 and the small outer diameter portion 1114. A width of the lateral ribs 2130 is narrower than the width of the upper rib 2120. An angle between the upper rib 2120 and the lateral ribs 2130 with respect to the central axis CA1 may be, but is not limited to, approximately 120 degrees.

As shown in FIGS. 11 and 12, the upper rib 2120 and the lateral ribs 2130 extend to the rear end surface 1116 of the attachment portion 1100 in the rearward direction BD toward the butt of the fishing rod. Therefore, the rear end surface 2121 of the upper rib 2120 in the rearward direction BD and rear end surfaces 2131 of the lateral ribs 2130 in the rearward direction BD form the same surface together with the rear end surface 1116 of the attachment portion 1100. That is, in this embodiment, the rear end surface 1116 of the attachment portion 1100 in the rearward direction BD includes the rear end surface 2121 of the upper rib 2120 and the rear end surfaces 2131 of the lateral ribs 2130, and the rear end surface 2121 of the upper rib 2120 and the rear end surfaces 2131 of the lateral ribs 2130 form a portion of the rear end surface 1116 of the attachment portion 1100.

The upper rib 2120 and the lateral ribs 2130 improve the strength of the attachment portion 1100 in the circumferential direction of the attachment portion. The rear end surface 2121 of the upper rib 2120 and the rear end surfaces 2131 of the lateral ribs 2130 are located on the same surface as the rear end surface 1116 of the attachment portion 1100. Thus, cracks created from the rear end surface 1116 of the attachment portion 1100 and whitening in the rear end surface 1116, which may occur when the attachment portion 1100 is fitted with the tubular rod of the rod body 110, can be prevented. That is, the upper rib 2120 and the lateral ribs 2130 can increase the fitting strength of the attachment portion 1100.

Due to the presence of the upper rib 2120, when the attachment portion 1100 is molded, the resin materials composing the attachment portion 1100 can smoothly flow in a molding die for molding the attachment portion 1100, and weld line strength can be reinforced where the resin materials combine together. For example, rib formers, which have shapes corresponding to the upper rib 2120 and the lateral ribs 2130 and are positioned to correspond to the positions of the upper rib 2120 and the lateral ribs 2130, may be formed on a molding surface of the molding die for molding the attachment portion 1100. With regard to the insert injection molding, a gate, through which molten carbon long fiber reinforced resin materials enter the molding die, may be positioned at a lowermost end of the large outer diameter portion 1113 of the attachment portion 1100. Therefore, the resin, which flows in through the gate, is bifurcated into two flows. Then, the two resin flows may flow to the upper end of the attachment portion 1100 and then may combine together at the upper end of the attachment portion 1100. The attachment portion 1100 has the large outer diameter portion 1113 and the small outer diameter portion 1114 having different thicknesses. Thus, the resins, which pass the large outer diameter portion 1113 and the small outer diameter portion 1114, have difference in flow velocity. In addition, time lag occurs in the two resin flows which reach the upper rib 2120. Thus, the two resin flows can combine together in the vicinity of the upper rib 2120 while changing their flow directions. Moreover, due to the above-described shape of the upper rib 2120, the two resin flows can be disturbed and the carbon long fibers in the resin can be tangled with one another. Therefore, molding defects such as cracks can be avoided at the upper end of the attachment portion 1100, and the attachment portion 1100 can have a high strength at the weld line of the resins.

The attachment portion 1100 may have a radial thickness that is gradually thicker upward from a lower end of the attachment portion. That is, the radial thickness of the attachment portion 1100 may be smallest at the lowermost end of the attachment portion, and may gradually increase upward along the circumferential direction of the attachment portion 1100. With such thickness configuration of the attachment portion 1100, the carbon long fiber reinforced resin material may smoothly flow through a molding space in the molding die, and therefore, the attachment portion can be molded without a molding defect such as a so-called short shot that appears due to insufficient volume of the molten resin.

As shown in FIG. 11, the attachment portion 1100 has a plurality of concave portions 2119 that are concave in a circular arc shape in the large outer diameter portion 1113. When the user fits the attachment portion 1100 with the outer peripheral surface of the tubular rod of the rod body 110, the concave portions 2119 allows the user's finger to be caught thereon.

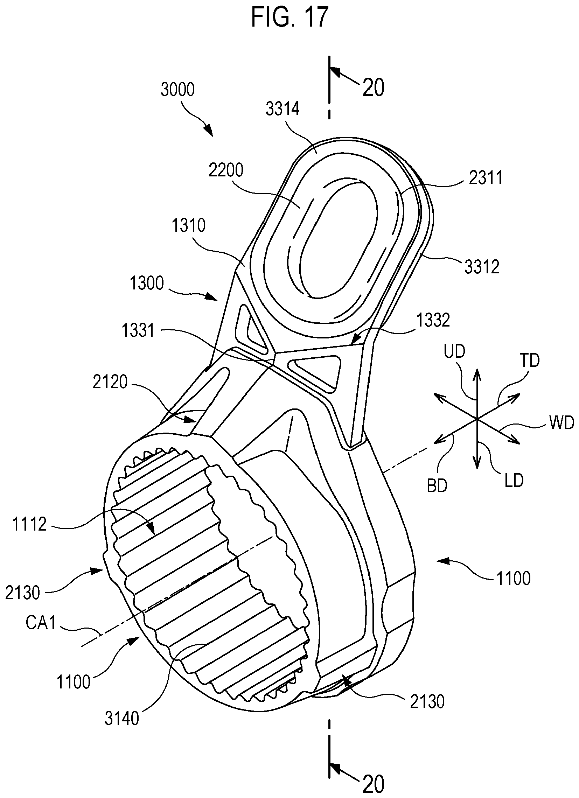

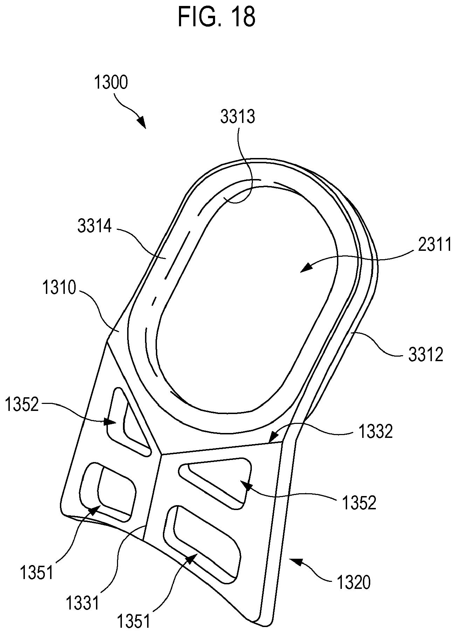

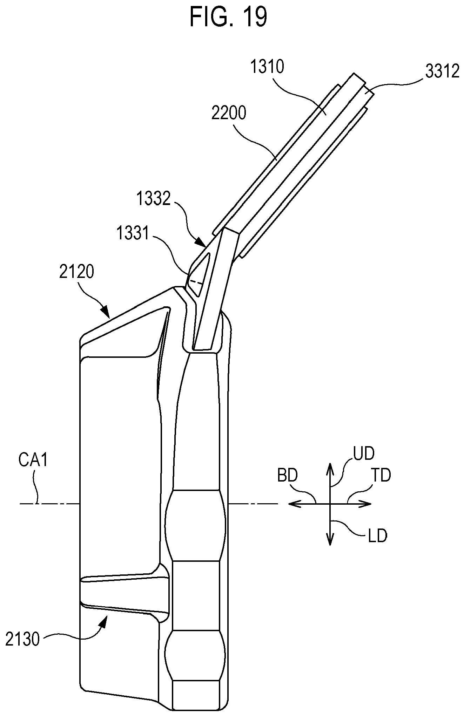

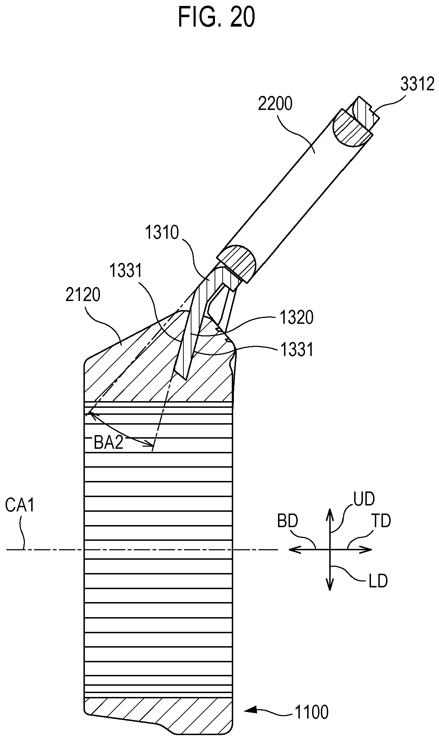

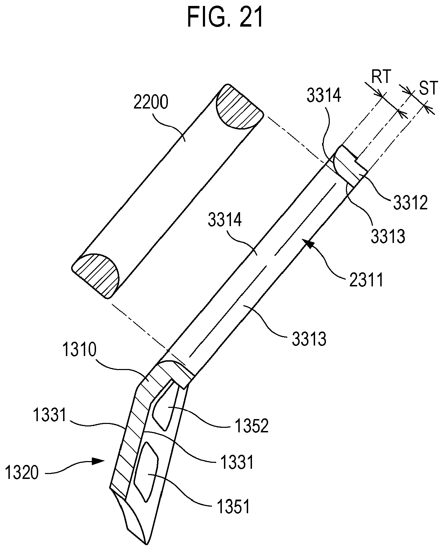

Reference is made to the examples shown in FIGS. 17 to 21 to describe a fishing line guide according to a third embodiment of the present disclosure. FIG. 17 is a perspective view showing a fishing line guide according to the third embodiment. FIG. 18 is a perspective view showing a ring support shown in FIG. 17. FIG. 19 is a right side view of the fishing line guide shown in FIG. 17. FIG. 20 is a sectional view taken along the line 20-20 of FIG. 17. FIG. 21 is a longitudinal sectional view showing a guide ring and a ring support. The fishing line guide shown in FIGS. 17 to 21 has a configuration similar to that of the fishing line guide 2000 of the above-described embodiment. Descriptions are made hereinafter only as to configurations different from that of the fishing line guide 2000.

As shown in FIGS. 17 to 21, the fishing line guide 3000 includes the ring support 1300 having stronger strength. The ring support 1300 includes, in the ring holding portion 1310, a reinforcing flange 3312 as a structure for improving the strength. The reinforcing flange 3312 has an oblong shape so as to correspond to the outer shape of the guide ring 2200. The reinforcing flange 3312 protrudes from the ring holding portion 1310 in an oblique direction between the frontward direction TD and the downward direction LD. The reinforcing flange 3312 is located in the ring holding portion 1310, and is spaced from the second bending portion 1332. The reinforcing flange 3312 is located in the ring holding portion 1310 such that a lowermost end point of the reinforcing flange is positioned below the both end points of the second bending portion 1332.

As shown in FIGS. 18, 20 and 21, the reinforcing flange 3312 defines the ring holding hole 2311 at an inner peripheral surface thereof. The inner peripheral surface of the reinforcing flange 3312 comprises a fitting surface 3313 and a guide surface 3314. The fitting surface 3313 extends in an annular shape, and the guide ring 2200 is fitted to the fitting surface 3313. The fitting surface 3313 is formed as a flat surface. The reinforcing flange 3312 protrudes perpendicularly from the ring holding portion 1310. The reinforcing flange 3312 may protrude from the ring holding portion 1310 such that a protruding length ST of the fitting surface 3313 is smaller than a thickness RT of the ring holding portion 1310. The guide surface 3314 connects with the fitting surface 3313. The guide surface 3314 extends in an annular shape along the fitting surface 3313. The guide surface 3314 is curved with respect to the fitting surface 3313, and is formed as a curved surface. That is, a diameter of the guide surface 3314 gradually decreases toward the fitting surface 3313. As shown in FIG. 21, when the guide ring 2200 is fitted to the reinforcing flange 3312, the guide ring 2200 can be fitted from the guide surface 3314 to the fitting surface 3313. That is, the outer peripheral surface of the guide ring 2200 can be fitted to the fitting surface 3313 along the guide surface 3314. Therefore, when the guide ring 2200 is fitted to the ring holding portion 1310, cracks on the outer peripheral surface of the guide ring 2200 can be prevented. Further, when the guide ring 2200 and the fitting surface 3313 of the reinforcing flange 3312 are coupled to each other, a space, in which an adhesive can stay, can be formed between the outer peripheral surface of the guide ring 2200 and the guide surface 3314 of the reinforcing flange 3312. Thus, a strong bonding strength may be achieved between the guide ring 2200 and the reinforcing flange 3312.

The bending strength of the ring support 1300 is improved by the reinforcing flange 3312 formed in the ring holding portion 1310. The reinforcing flange 3312 may be formed by forming a through-hole, which corresponds to the shape of the ring holding hole 2311, in the metal sheet for forming the ring support 1300 and then burring the whole circumference of the through-hole.

The fishing line guide 3000 of this embodiment includes not only the above-described Y-shaped bending portion in the ring support 1300 but also the reinforcing flange 3312 in the ring holding portion 1310. Thus, the fishing line guide of this embodiment includes the ring support 1300 whose bending strength is improved as a whole.

In this embodiment, as shown in FIG. 17, the attachment portion 1100 has, at its inner peripheral surface, a plurality of serrations 3140 that are arranged in a circumferential direction and extend in the direction of the central axis CA1 of the fishing rod. A cross-sectional shape of the serration 3140 has a triangular shape that is pointed toward the central axis CA1 of the fishing rod. Therefore, the serrations 3140 come into close contact with the outer peripheral surface of the tubular rod at their apex portions of a triangular shape. In this embodiment, the attachment portion 1100 is composed of a high-strength resin material (e.g., the carbon long fiber reinforced resin). Therefore, the apex portion of the triangular shape of the serration 3140 has a high strength. Thus, when the attachment portion 1100 is fitted with the outer peripheral surface of the tubular rod of rod body, the apex portion of the serration 3140 is neither collapsed nor crushed due to a fitting force. That is, due to the high strength of the attachment portion 1100, the serrations 3140 maintain their initial heights without being collapsed. Since the apex portions of the serrations 3140 are not collapsed, the attachment portion 1100 has a strong rotation resistance force.

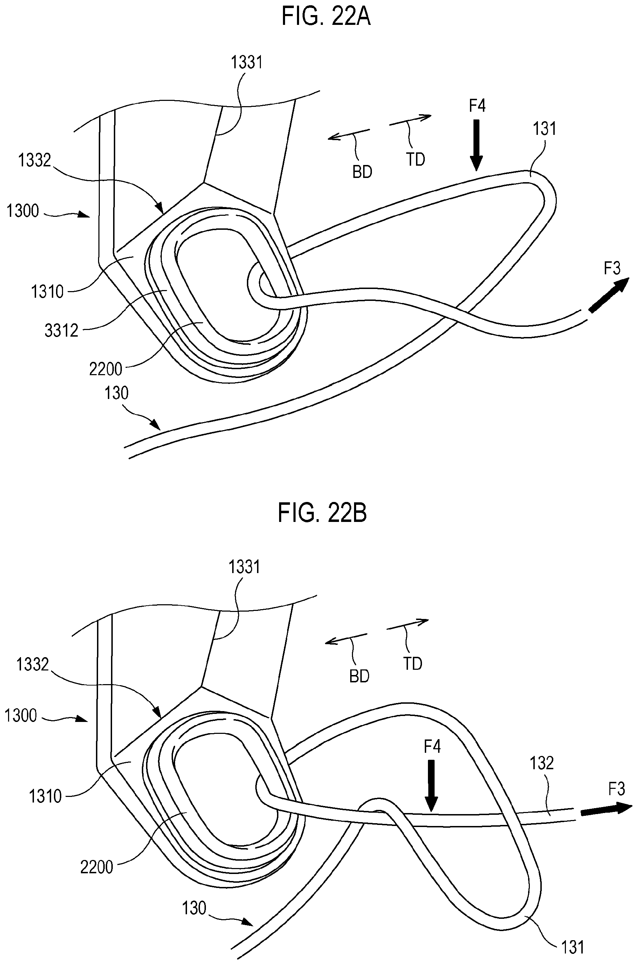

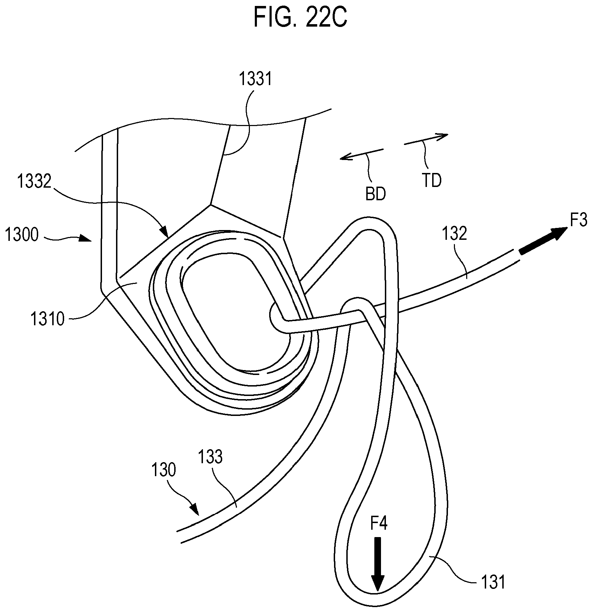

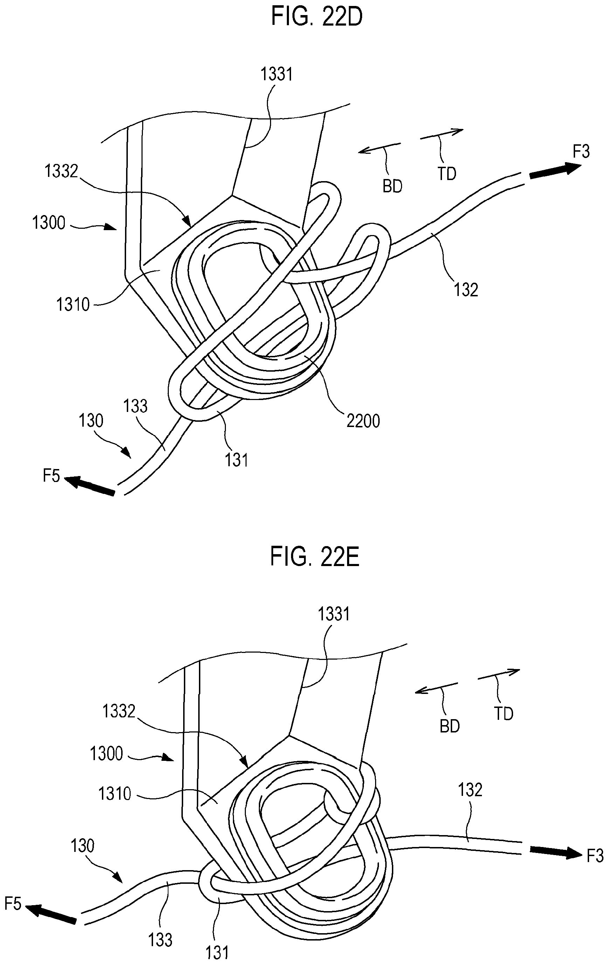

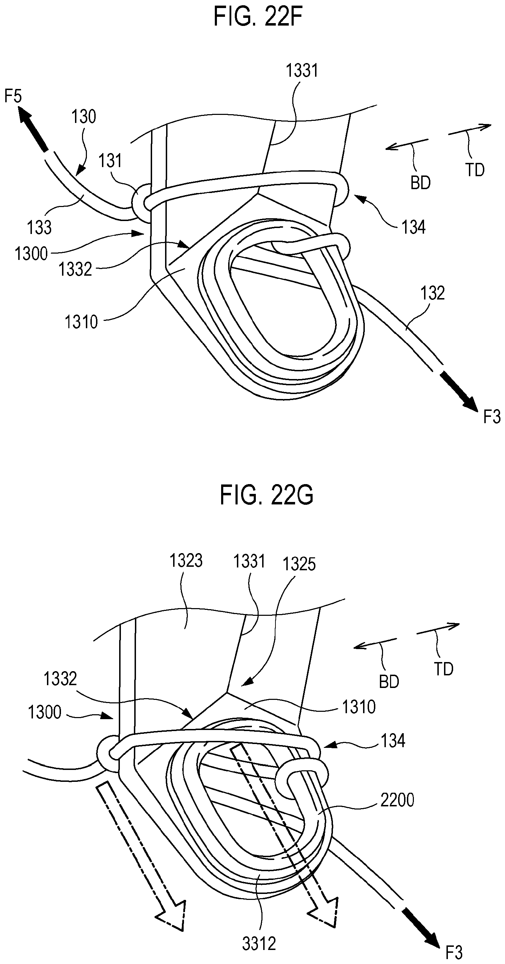

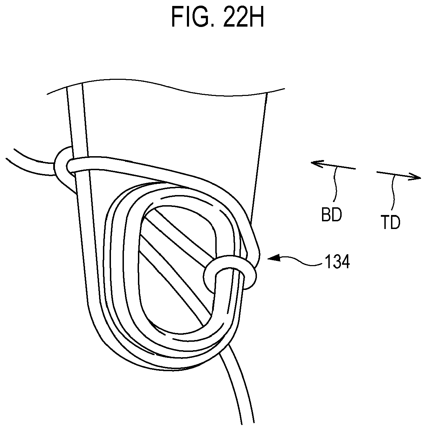

The fishing line guides according to the above-described embodiments are configured to smoothly untangle the line tangle of a fishing line in the event of the line tangle of the fishing line. For example, due to the Y-shaped bending portion of the ring support, the line tangle occurring at the fishing line guide can be smoothly untangled. With reference to FIGS. 22Ato 22G, descriptions are made as to an example where the line tangle of the fishing line occurs and an example where the line tangle is untangled. In FIGS. 22A to 22G, an arrow F3 indicates a tension which acts on a fishing line when a fishing rig is cast, an arrow F4 indicates a wind force which is applied to a fishing line guide when a fishing rig is cast, and an arrow F5 indicates a force of returning a fishing line toward a reel.

Referring to FIG. 22A, in the fishing line 130 reeled out from the reel when casting the fishing rig, a portion of the fishing line may pass the ring support 1300 due to the wind force F4 or due to a movement of the fishing rod, and then may make a looped portion 131. Referring to FIG. 22B, the looped portion 131 before passing through the guide ring 2200 may cross a portion 132 of the fishing line that is moved toward the tip of the fishing rod. Referring to FIG. 22C, the looped portion 131 may be moved toward the upper end of the ring support 1300 due to the wind force F4 or due to the movement of the fishing rod. Referring to FIG. 22D, due to the change of wind direction or the movement of the fishing rod, the force F5 of returning the fishing line toward the reel acts on a portion 133 of the fishing line that does not enter the guide ring 2200, and then the looped portion 131 may be inserted into between the portion 133 of the fishing line and the ring support 1300 and then be wound on the ring support 1300. Referring to FIG. 22E, due to the returning force F5 and the tension F3 heading toward the tip of the fishing rod, the looped portion 131 wound on the ring support 1300 may be pulled and contracted. Referring to FIG. 22F, the looped portion 131 may be further contracted by the returning force F5, and the fishing line 130 may be brought into a locked state while forming a line tangle portion 134 wound in the vicinity of the first bending portion 1331 of the ring support 1300. Due to the line tangle portion 134 in the locked state shown in FIG. 22F, the line tangle of the fishing line may occur in the fishing line guide.

However, due to the Y-shaped bending portion of the ring support 1300, the fishing line guides according to the embodiments can smoothly untangle the line tangle of the fishing line. In the state where the line tangle occurs, the tension F3 continues to be applied to the fishing line 130. Referring to FIG. 22G, the line tangle portion 134 in the locked state is smoothly slid toward the upper end of the ring support 1300 by the tension F3. If the line tangle portion 134 passes the upper end of the ring support 1300, then the line tangle portion 134 can be untangled. In this regard, due to the Y-shaped bending portion, the ring holding portion 1310 is bent with respect to the ring supporting portion 1320 and the ring supporting portion 1320 is bent toward the tip of the fishing rod. Therefore, a lower wall surface of the reinforcing flange 3312 and a lower wall surface of the guide ring 2200 are situated in a concave portion 1325 of the front surface 1323 which is formed by the Y-shaped bending portion. That is, both a lowermost end point of the reinforcing flange 3312 and a lowermost end point of the guide ring 2200 are located below the both end points in the width direction of the second bending portion 1332. In addition, due to the Y-shaped bending portion, the line tangle portion 134 cannot enter the concave portion 1325 and is spaced from the concave portion 1325. Therefore, the line tangle portion 134 can be slid toward the upper end of the ring support 1300 and then be untangled without being caught by the lower wall surface of the reinforcing flange 3312 or the lower wall surface of the guide ring 2200.

FIG. 22H shows a ring support according to a comparative example where the line tangle cannot be untangled. As shown in FIG. 22H, in the ring support which does not include the Y-shaped bending portion according to the embodiments, the line tangle portion 134 is caught by the lower wall surface of the reinforcing flange or the lower wall surface of the guide ring, and cannot be moved toward the upper end of the ring support. Thus, the line tangle cannot be untangled.

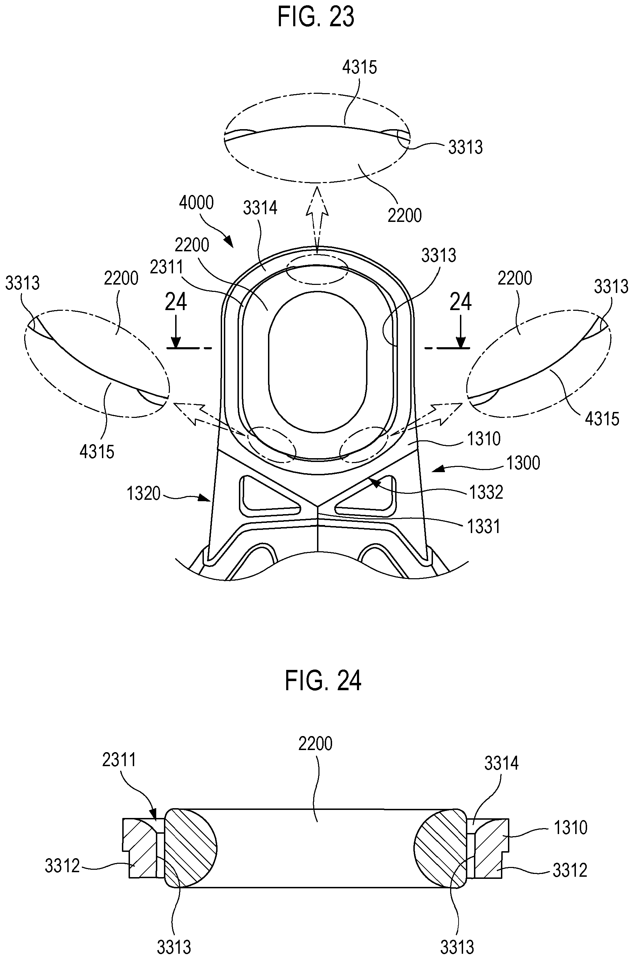

Reference is made to the examples shown in FIGS. 23 and 24 to describe a fishing line guide according to a fourth embodiment of the present disclosure. FIG. 23 shows a ring support of a fishing line guide according to the fourth embodiment, and FIG. 24 is a sectional view taken along the line 24-24 of FIG. 23.

In the fishing line guide 4000 of this embodiment, the reinforcing flange 3312 of the ring support 1300 has a plurality of fitting protrusions 4315 formed in the inner peripheral surface thereof (specifically, the fitting surface 3313). As shown in FIG. 23, three fitting protrusions 4315 may be formed in the fitting surface 3313. The number of the fitting protrusions 4315 is not limited to three and may be four or more. The fitting protrusions 4315 protrude from the fitting surface 3313 of the reinforcing flange 3312 toward the ring holding hole 2311 with a slight height. The fitting protrusions 4315 may be formed by cutting the fitting surface 3313 of the reinforcing flange 3312 with a slight depth through shaving working.

The guide ring 2200 may be inserted into the ring holding hole 2311 and may be fitted to the surfaces of the three fitting protrusions 4315. If the guide ring 2200 is inserted into the ring holding hole 2311, the fitting protrusions 4315 come into contact with the outer peripheral surface of the guide ring 2200. The ring holding portion 1310 holds the guide ring 2200 at three locations by the three fitting protrusions 4315 of the reinforcing flange 3312. That is, the ring holding portion 1310 is contacted with the guide ring 2200 through the three fitting protrusions 4315. The outer peripheral surface of the guide ring 2200 does not come into surface contact with the fitting surface 3313 of the reinforcing flange 3312, but comes into surface contact or point contact with the fitting protrusions 4315. Further, as shown in FIG. 24, the guide ring 2200 is fitted with the fitting protrusions 4315 with a clearance formed between the outer peripheral surface of the guide ring 2200 and the inner peripheral surface of the reinforcing flange 3312 (the fitting surface 3313). Such a clearance is formed due to the fitting protrusions 4315 protruding from the fitting surface 3313, and is capable of receiving an adhesive. Due to the structure holding the guide ring 2200 by fitting at three locations, it is not necessary to accurately work the guide ring 2200 and the ring holding hole 2311 so that the dimensions of the guide ring 2200 and the ring holding hole 2311 allow the guide ring and the ring holding hole to be fitted with each other. That is, due to the structure holding the guide ring 2200 by fitting at three locations, a fitting tolerance can be increased between the guide ring 2200 and the ring holding hole 2311.

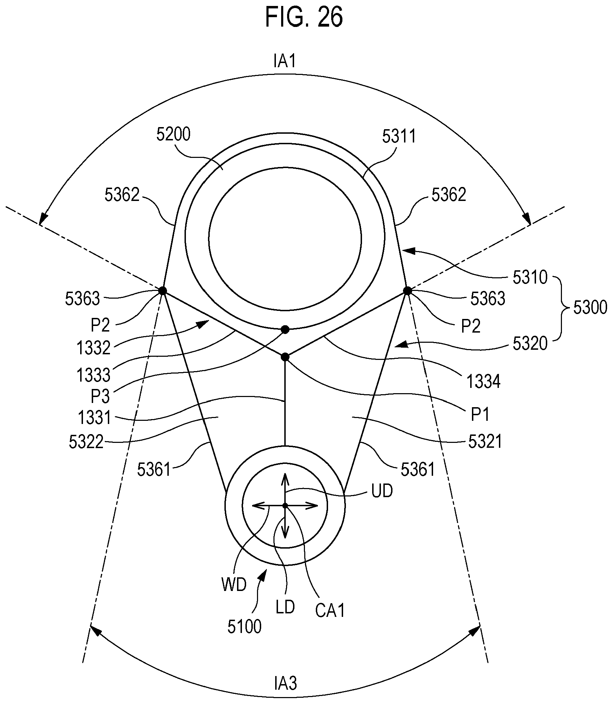

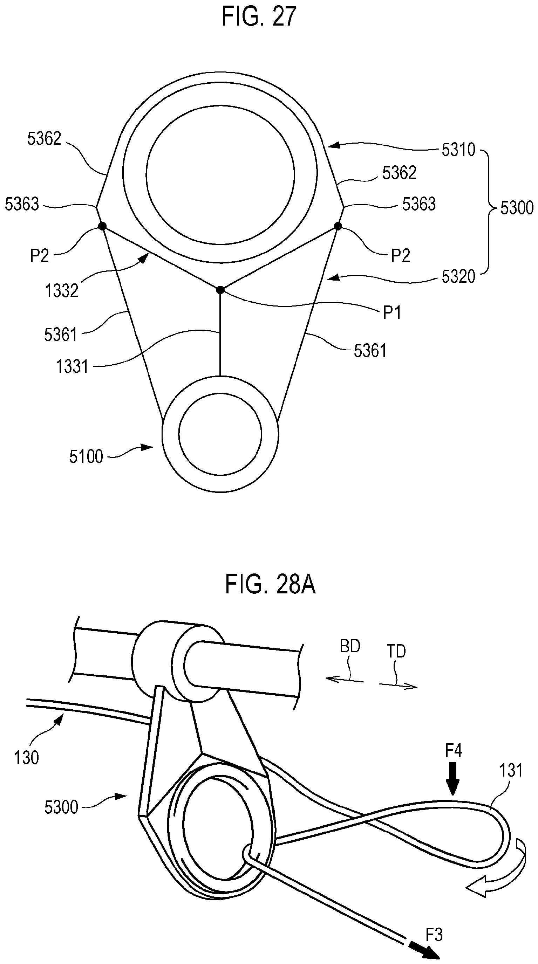

Reference is made to the examples shown in FIGS. 25 to 27 to describe a fishing line guide according to a fifth embodiment of the present disclosure. FIG. 25 is a perspective view showing a fishing line guide according to a fifth embodiment of the present disclosure. FIG. 26 is a front view of the fishing line guide shown in FIG. 25. FIG. 27 is a front view showing a variation example of the fishing line guide according to the fifth embodiment.

The fishing line guide 5000 according to the fifth embodiment shown in FIG. 25 has the same configuration as those of the fishing line guides of the above-described embodiments, except that the guide ring is larger than the outer diameter of the tubular rod and the ring support has a shape becoming gradually narrower toward the attachment portion.

Referring to FIG. 25, the fishing line guide 5000 includes: an attachment portion 5100 attached to the rod body 110 of the fishing rod (specifically, one of the tubular rods constituting the rod body 110); a guide ring 5200 through which the fishing line 130 passes; and a ring support 5300 that holds and supports the guide ring 5200 and is partially coupled to the attachment portion 5100.

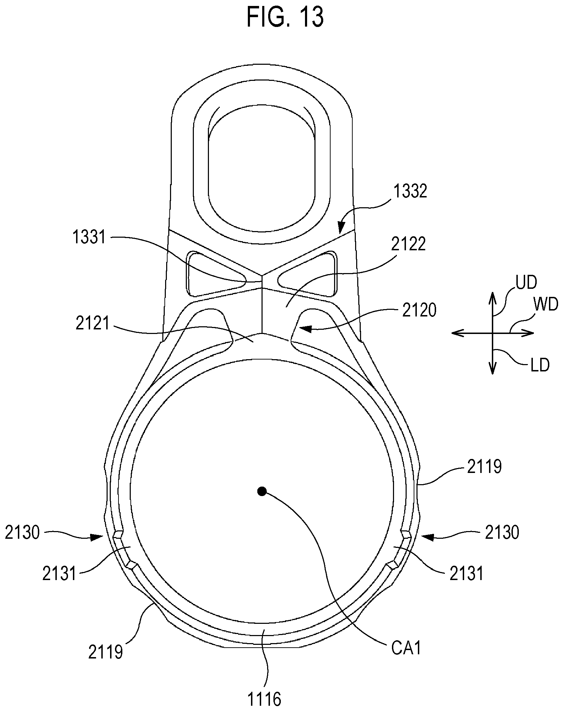

The guide ring 5200 has an outer diameter larger than that of the tubular rod of the rod body 110. Therefore, the fishing line guide 5000 may be applied to an example where the guide ring having an outer diameter larger than that of the tubular rod is used. The shape and configuration of the guide ring 5200 may be similar to the shape and configuration of the guide ring shown in FIGS. 3 and 13.

The attachment portion 5100 is formed as an annular body, and one of the tubular rods of the rod body 110 can pass through the attachment portion 5100. In the state where the tubular rod passes through the attachment portion 5100, the attachment portion 5100 can slide along the tubular rod and be rotated with respect to the tubular rod. The tubular rod has a tapering shape that becomes gradually thinner in the frontward direction TD. Therefore, the attachment portion 5100 can be fitted with and fixed to the outer peripheral surface of the tubular rod by moving the attachment portion 5100 in the rearward direction BD.

The attachment portion 5100 is integrally coupled to the ring support 5300 such that a lower portion of the ring support 5300 is embedded in the attachment portion 5100. For example, the attachment portion 5100 and the ring support 5300 may be integrally coupled to each other through injection molding of the resin material by using the ring support 5300 as an insert such that the lower portion of the ring support 5300 is embedded in the attachment portion 5100. The resin material of the attachment portion 5100 may include, but is not limited to, the above-described carbon long fiber reinforced resin material. As another example, the ring support 5300 and the attachment portion 5100 may be integrally coupled to each other through a manner of fitting and adhesive bonding between the lower portion of the ring support 5300 and the attachment portion 5100 such that the lower portion of the ring support 5300 is embedded in the attachment portion 5100.

The material and working manner of the ring support 5300 are similar to the material and working manner of the ring support in the above-described embodiments. The ring support 5300 is formed as a metallic thin plate whose portions constituting the ring support 5300 are bent or curved with respect to one another by bending portions formed therein.

The ring support 5300 has a shape that is suitable for the guide ring 5200 having an outer diameter larger than the outer diameter of the tubular rod. To this end, the ring support 5300 has a shape that becomes gradually narrower from the guide ring 5200 toward the attachment portion 5100. That is, portions of the lateral end edges of the ring support 5300 are formed to become close to a center of the ring support 5300 in the downward direction LD toward the attachment portion 5100.

Referring to FIG. 26, in an embodiment, the ring support 5300 includes a pair of first lateral end edges 5361, a pair of second lateral end edges 5362, and a pair of boundary portions 5363. The pair of first lateral end edges 5361 extend from the attachment portion 5100 in the upward direction UD, and are inclined so as to be away from each other in the upward direction. The pair of second lateral end edges 5362 extend from the pair of first lateral end edges 5361 in the upward direction UD respectively. The pair of second lateral end edges 5362 are inclined at an inclination angle different from the inclination angle of the pair of first lateral end edges 5361. Each of the pair of boundary portions 5363 is located between each of the first lateral end edges 5361 and each of the second lateral end edges 5362. The boundary portion 5363 becomes a boundary between the first lateral end edge 5361 and the second lateral end edge 5362. The inclination angle of the first lateral end edges 5361 and the inclination angle of the second lateral end edges 5362 are different with reference to the boundary portion 5363.

The pair of first lateral end edges 5361 become gradually more away from each other from the attachment portion 5100 toward the upper end of the ring support 5300. The pair of second lateral end edges 5362 are located in the vicinity of the guide ring 5200. The pair of second lateral end edges 5362 become gradually closer to each other toward the upper end of the ring support 5300. The pair of second lateral end edges 5362 are inclined toward each other at an included angle of more than zero degree and less than or equal to 30 degrees. As another example, the pair of second lateral end edges 5362 may be parallel with each other without the included angle. Due to the above-described shapes of the lateral end edges, the ring support 5300 has a shape that becomes gradually wider toward the guide ring 5200 and becomes gradually narrower from the boundary portions 5363. Thus, a width of the ring support 5300 becomes gradually larger and then gradually smaller in the upward direction UD, and becomes maximal at the boundary portions 5363.

Referring to FIGS. 25 and 26, the ring support 5300 includes a ring holding portion 5310 holding the guide ring 5200, and a ring supporting portion 5320 supporting the guide ring 5200 through the ring holding portion 5310. In the metallic thin plate composing the ring support 5300, the ring holding portion 5310 and the ring supporting portion 5320 are integrally formed, and the ring holding portion 5310 is flat.

The ring holding portion 5310 has a ring holding hole 5311 to which the guide ring 5200 is coupled. The ring holding hole 5311 is perforated through the ring holding portion 5310 in a thickness direction of the ring holding portion 5310. The ring holding portion 5310 has an approximately annular shape to hold the guide ring 5200 along the whole circumference of the guide ring 5200 by the ring holding hole 5311. The shape of the ring holding hole 5311 and the coupling between the ring holding hole 5311 and the guide ring 5200 may be similar to the shape and the coupling which have been described with reference to the fishing line guide of the above-described first embodiment.

The upper edge of the ring holding portion 5310 has a semicircular shape. Both lateral end edges of the ring holding portion 5310 in the width direction WD may become gradually away from each other in the downward direction LD toward the attachment portion 5100. As shown in FIG. 26, the lateral end edges of the ring holding portion 5310 are formed as the above-described second lateral end edges 5362. Therefore, the both lateral end edges of the ring holding portion 5310 are inclined toward each other at an included angle IA3 with respect to a center of the ring holding hole 5311. As another example, the both lateral end edges of the ring holding portion 5310 may be parallel. As a further example, portions of the lateral end edges of the ring holding portion 5310 may be formed as the above-described second lateral end edges 5362. A lower end edge of the ring holding portion 5310 has a V shape convex in the downward direction LD, and the ring holding portion 5310 is integrally connected to the ring supporting portion 5320 at the lower end edge thereof.

Referring to FIG. 26, the ring supporting portion 5320 has a V-shaped upper end edge that corresponds to the V-shaped lower end edge of the ring holding portion 5310. Each lateral end edge of the ring supporting portion 5320 in the width direction WD includes the above-described first lateral end edge 5361. Therefore, the both lateral end edges of the ring supporting portion 5320 become gradually closer to each other in the downward direction LD toward the attachment portion 5100.

The ring support 5300 has the above-described first bending portion 1331 in the ring supporting portion 5320. The first bending portion 1331 is located at the center of the ring supporting portion 5320 in the width direction WD. The first bending portion 1331 extends to a lower end of the ring supporting portion 5320 in the downward direction LD toward the tubular rod of the rod body 110. The ring supporting portion 5320 is embedded within the attachment portion 5100 at its lower portion including the first bending portion 1331.

The ring supporting portion 5320 is bent with reference to the first bending portion 1331 at the above-described first bending angle in the direction toward the tip of the fishing rod (the frontward direction TD). Therefore, as shown in FIG. 26, the ring supporting portion 5320 has a right half portion 5321 and a left half portion 5322 that are divided by the first bending portion 1331 and are formed in a symmetrical shape. The right half portion 5321 and the left half portion 5322 are integrally formed via the first bending portion 1331, and are inclined at the above-described first bending angle in the frontward direction TD so as to face toward each other.

The ring support 5300 has the above-described second bending portion 1332 that is a boundary between the ring holding portion 5310 and the ring supporting portion 5320. The lower end edge of the ring holding portion 5310 and the upper end edge of the ring supporting portion 5320 form the second bending portion 1332. The ring holding portion 5310 is bent with reference to the second bending portion 1332 with respect to the ring supporting portion 5320 at the above-described second bending angle in the direction toward the tip of the fishing rod (the frontward direction TD). The second bending portion 1332 extends from one lateral end of the ring support 5300 to an opposite lateral end of the ring support 5300. Connection points between the second bending portion 1332 and the both lateral end edges of the ring support 5300 become both end points P2 of the second bending portion. In this embodiment, the pair of boundary portions 5363 between the first lateral end edges 5361 and the second lateral end edges 5362 are located at the both end points P2 of the second bending portion 1332 respectively.

The second bending portion 1332 is convex toward the lower end of the ring support 5300. Referring to FIGS. 25 and 26, the second bending portion 1332 has a V shape convex in the downward direction LD, and is connected to the upper end of the first bending portion 1331 at its center point P1. Further, when the ring support 5300 is viewed from a lateral side, the second bending portion 1332 is inclined in an oblique direction between the frontward direction TD and the upward direction UD As shown in FIG. 26, the second bending portion 1332 includes a pair of the linear bending portions 1333, 1334 that extend from the connection point between the first bending portion 1331 and the second bending portion 1332 (the center point P1 of the second bending portion 1332) at an obtuse angle with respect to the first bending portion 1331.

The first bending portion 1331 and the second bending portion 1332 meets each other and form a Y shape, thereby forming the Y-shaped bending portion in the ring support 5300. Accordingly, the ring support 5300 is formed as a metallic thin plate in which the ring holding portion 5310, the right half portion 5321 of the ring supporting portion 5320 and the left half portion 5322 of the ring supporting portion 5320 are bent toward one another. Further, in such a metallic thin plate, the ring holding portion 5310, the right half portion 5321 of the ring supporting portion 5320, and the left half portion 5322 of the ring supporting portion 5320 are integrally formed via the first and second bending portions 1331, 1332 forming the Y-shaped bending portion, and the ring holding portion and the right and left half portions of the ring supporting portion are bent toward one another by the first and second bending portions 1331, 1332. As such, the ring support 5300 is provided with the Y-shaped bending portion that is formed by the first bending portion 1331 and the second bending portion 1332. Further, the above-described Y-shaped work-hardened portions are formed within the ring support 5300 along the Y-shaped bending portion. Thus, the fishing line guide 5000 has an improved bending strength, an improved rotation prevention strength and an improved attachment strength due to the above-described Y-shaped bending portion formed by the first bending portion and the second bending portion.

To smoothly untangle the line tangle, each portion of the ring support 5300 may be formed in a specific dimensional range. Referring to FIG. 26, an included angle between the linear bending portions 1333, 1334 of the second bending portion 1332 may be the above-described included angle IA1. Further, the center point P1 of the second bending portion 1332 is located below the both end points P2 of the second bending portion 1332, and the lowermost end point P3 of the ring holding hole 5311 is located below the both end points P2 of the second bending portion 1332, thereby contributing to the smooth untangling of the line tangle. Further, the pair of boundary portions 5363 of the lateral end edges of the ring support 5300 are located at the both end points P2 of the second bending portion 1332 respectively, or are located above the both end points P2 of the second bending portion 1332 respectively. As shown in FIG. 26, the pair of boundary portions 5363 of the lateral end edges of the ring support 5300 may be located at the both end points P2. When the ring support 5300 is formed such that the first bending angle BA1, the second bending angle BA2, the included angle IA1 and the included angle IA3 have the angle values within the above-described respective ranges, the line tangle in the ring support 5300 can be smoothly untangled. Further, the line tangle in the ring support 5300 can be smoothly untangled due to the above-described positional relationship of the center point P1 of the second bending portion 1332, the both end points P2 of the second bending portion 1332, the lowermost end point P3 of the ring holding hole 5311, and the pair of boundary portions 5363 of the lateral end edges of the ring support 5300.

FIG. 27 shows a variation example of the fishing line guide of the above-described fifth embodiment. Referring to FIG. 27, the pair of boundary portions 5363 of the lateral end edges of the ring support 5300 are located above the both end points P2 of the second bending portion 1332. Therefore, each lateral end edge of the ring holding portion 5310 includes both the first lateral end edge 5361 and a portion of the second lateral end edge 5362.

With reference to FIGS. 28A to 28J, descriptions are made as to examples where the line tangle occurs and is untangled in the fishing line guide of this embodiment. FIGS. 28A to 28J sequentially show the examples where the line tangle occurs and is then untangled in the fishing line guide shown in FIG. 25. In FIGS. 28A to 28J, an arrow F3 indicates a tension which acts on a fishing line when a fishing rig is cast, an arrow F4 indicates a wind force which is applied to a fishing line guide, and an arrow F5 indicates a force of returning a fishing line toward a reel.

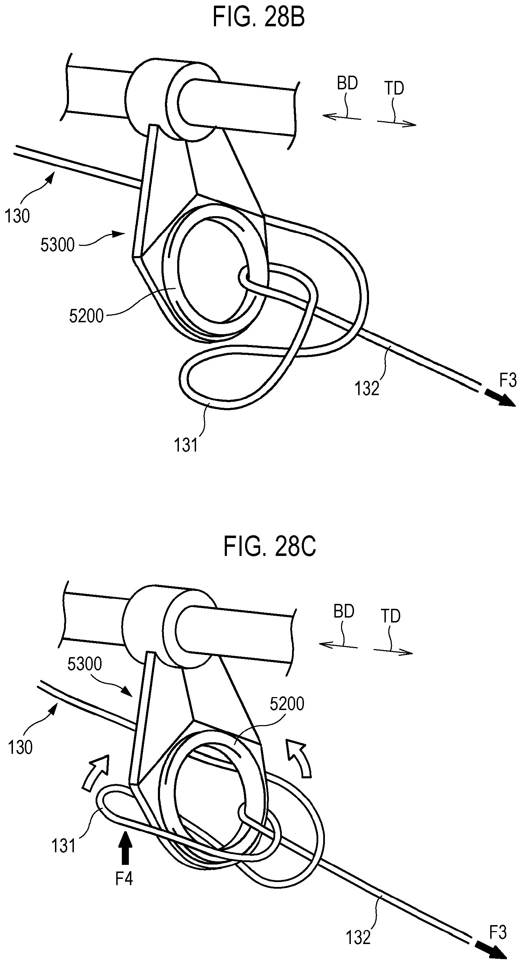

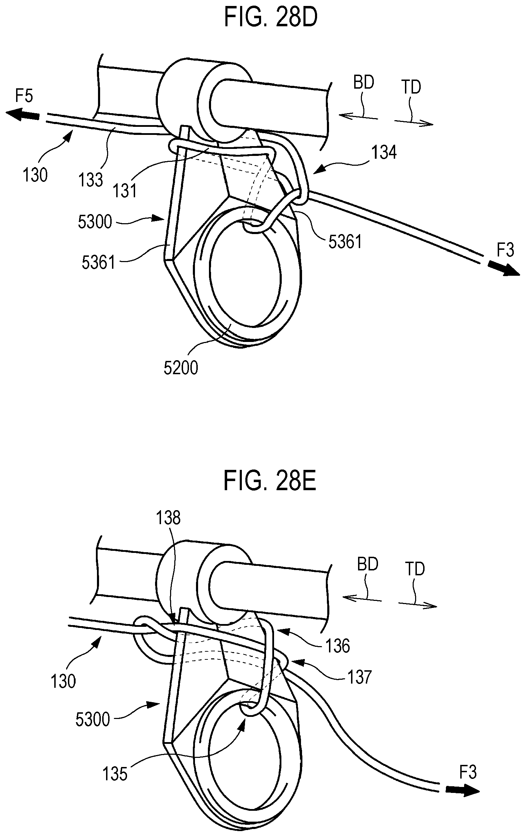

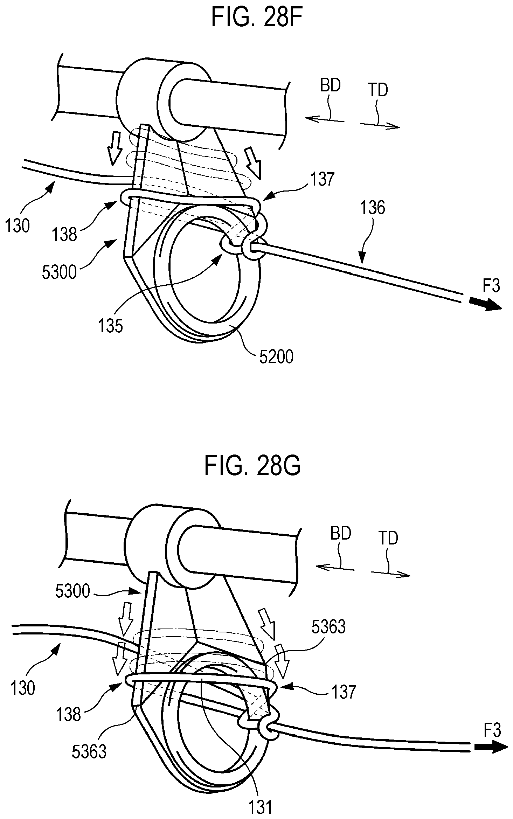

Referring to FIG. 28A, in the fishing line reeled out from the reel when casting the fishing rig, a portion of the fishing line 130 may pass the ring support 5300 due to the wind force F4 or due to a movement of the fishing rod, and then may make the looped portion 131. Referring to FIG. 28B, the looped portion 131 before passing through the guide ring 5200 may cross the portion 132 of the fishing line that is moved toward the tip of the fishing rod. Referring to FIG. 28C, due to the wind force F4 or due to the movement of the fishing rod, the looped portion 131 may pass the upper end of the ring support 5300 and then be moved toward the lower end of the ring support 5300. Referring to FIG. 28D, due to the change of wind direction or due to the movement of the fishing rod, the force F5 of returning the fishing line toward the reel acts on the portion 133 of the fishing line that does not enter the guide ring 5200, and the looped portion 131 is moved to the lower end of the ring support 5300 and may be wound on the ring support 5300. In this regard, since the width of the ring support 5300 becomes gradually narrower toward the lower end of the ring support 5300 due to the pair of first lateral end edges 5361 of the ring support 5300, the looped portion 131 is moved to the vicinity of the attachment portion 5100. Therefore, the line tangle portion 134 is formed at a lateral side of the ring support 5300, and the fishing line may be brought into a locked state. Referring to FIG. 28E, the portions 135, 136, 137, 138 of the fishing line may be tightened to the ring support 5300 due to the tension F3 heading toward the tip of the fishing rod. Referring to FIG. 28F, under the situation where the tension F3 continues to act, the portion 136 of the fishing line is moved greatly toward the tip of the fishing rod due to the tension F3, and the portion 135 of the fishing line is tightened most. Thus, the portion 135 of the fishing line becomes a fulcrum, and the portion 137 of the fishing line and the portion 138 of the fishing line may be moved toward the guide ring 5200 by the tension F3. Referring to FIG. 28G, under the situation where the tension F3 continues to act, the portion 137 of the fishing line tangled on the ring support 5300 may climb over the boundary portion 5363 of the lateral end edge of the ring support 5300, and then be moved toward the upper end of the ring support 5300. Next, the portion 138 of the fishing line may climb over the boundary portion 5363 of the lateral end edge of the ring support 5300 and then be moved toward the upper end of the ring support 5300. Referring to FIG. 28H, under the situation where the tension F3 continues to act, the looped portion 131 and the line tangle portion 134 may be moved toward the upper end of the ring support 5300. Referring to FIGS. 281 and 28J, under the situation where the tension F3 continues to act, the looped portion 131 slides toward the upper end of the ring support 5300, and the line tangle portion 134 can be untangled as the looped portion 131 passes the upper end of the ring support 5300.

Due to the Y-shaped bending portion of the ring support 5300, the ring holding portion 5310 is bent with respect to the ring supporting portion 5320 and the ring supporting portion 5320 is bent toward the tip of the fishing rod. Thus, a lower wall surface of the guide ring 5200 is located in the vicinity of the concave portion 1325 which is formed by the Y-shaped bending portion. That is, a lowermost end point of the guide ring 5200 is located below the both end points of the second bending portion 1332. In addition, due to the Y-shaped bending portion, the looped portion 131 cannot enter the concave portion 1325 and is spaced from the concave portion 1325. Therefore, the looped portion 131 may be smoothly slid to the upper end of the ring support 5300 without being caught by the lower wall surface of the guide ring 5200. Further, since the pair of boundary portions 5363 of the lateral end edges of the ring support 5300 are located at or above the both end points of the second bending portion 1332, the portion 137 and the portion 138 of the fishing line shown in FIGS. 28F and 28G can smoothly climb over the boundary portion 5363 and the looped portion 131 can be smoothly moved to the upper end of the ring support 5300.

FIG. 28K shows a fishing line guide according to a comparative example in which the line tangle cannot be untangled. In the ring support shown in FIG. 28K, the boundary portions 5363 of the lateral end edges are located below the both end points of the second bending portion 1332. Therefore, the portion 137 of the fishing line, which is moved while the portion 135 of the fishing line becomes a fulcrum, fails to climb over the boundary portion 5363. If the tension F3 is applied further, the portion 137 of the fishing line and the portion 138 of the fishing line are tightened. Thus, the looped portion 131 cannot be moved toward the upper end of the ring support, and therefore the line tangle of fishing line cannot be untangled.

Referring to FIGS. 29 to 361, descriptions are made as to embodiments of the method of manufacturing a fishing line. By the manufacturing method according to the embodiments, the fishing line guide, which has a guide ring (e.g., the guide rings shown in FIGS. 3 and 11) for guiding a fishing line and is attached to a tubular rod of a fishing rod (e.g., one of the tubular rods shown in FIG. 1), may be manufactured. The method of manufacturing a fishing line guide according to the embodiments commonly include: a step of working a ring support composed of a metallic thin plate (e.g., the ring supports shown in FIGS. 7 and 15); and a step of injection molding an attachment portion (e.g., the attachment portions shown in FIGS. 3, 11 and 17) from a resin material by using the ring support as an insert.

FIG. 29 is a block diagram showing steps of a method of manufacturing a fishing line guide according to a first embodiment of the present disclosure. FIGS. 30A to 30E show concrete examples performed at the steps shown in FIG. 29.

Referring to FIG. 29, the method of manufacturing a fishing line guide according to the first embodiment includes a step S100 of working a ring support composed of a metallic thin plate, and a step S200 of injection molding an attachment portion from a resin material by using the ring support as an insert. The ring support is worked through the step S100, and the ring support includes, at least, a ring holding portion holding the guide ring, a ring supporting portion integrally formed with the ring holding portion, and a first bending portion bending the ring supporting portion. The attachment portion is injection molded through the step S200, and the attachment portion has an inner peripheral surface (e.g., the inner peripheral surfaces of the attachment portions shown in FIGS. 3, 11, and 17) fitted with the outer peripheral surface of the tubular rod. The attachment portion is molded by hardening the resin material injected in the injection molding step. The resin material composing the attachment portion may be carbon fiber reinforced resin. More specifically, the resin material composing the attachment portion may be carbon long fiber reinforced resin.

The carbon long fiber reinforced resin material has an impact strength that is 3 to 5 times higher than that of a carbon short fiber reinforced resin material. The carbon long fiber reinforced resin material has a high rigidity due to a high fiber-mixed amount, and has an excellent creep property at high temperature. The carbon long fiber reinforced resin material has a high elasticity retention rate at high temperature, and has an excellent impact retention rate at low temperature. The carbon long fiber reinforced resin material has a high dimensional stability due to a small bending deformation, a small tensile deformation and a low linear expansion coefficient, and has an excellent wear resistance.

In an embodiment, the carbon long fiber reinforced resin material has a tensile strength of 270Mpa, a bending strength of 340Mpa, a bending elastic modulus of 17000Mpa, a Charpy notched impact strength of 22KJ/m2, a deflection temperature under load of 178°C, and a density of 1.16g/cm3. The carbon long fiber may have a length of about 7mm and a cylindrical shape. The content of carbon in the carbon long fiber reinforced resin material may be about 30%. The resin in the carbon long fiber reinforced resin material may be nylon resin.

Referring to FIG. 29, in an embodiment, the step S100 of working the ring support may include: a step S110 of forming a through-hole, to which the guide ring is coupled, in a metal sheet; a step S130 of bending the metal sheet such that a first bending portion is formed in the metal sheet; and a step S140 of blanking the ring support from the metal sheet.

Referring to FIGS. 29 and 30A, in the step S110, the metal sheet 200 of a rectangular flat plate is prepared, and the through hole 211 is formed in the metal sheet 200. The metal sheet 200 may be composed of a metallic material such as stainless steel, stainless alloy, titanium alloy, or pure titanium. In this embodiment, the metal sheet 200 is composed of a metallic material of pure titanium. Forming the through-hole 211 may be performed through punching or drilling. The through-hole 211 may become the ring holding hole shown in FIG. 3, and the guide ring shown in FIG. 3 may be coupled to the through-hole 211.

Referring to FIGS. 29 and 30B, in the step S130, the metal sheet 200 is bent such that the first bending portion 1331 and the second bending portion 1332 are formed in the metal sheet 200 by press working the metal sheet 200 by using a press die. Forming the first and second bending portions 1331, 1332 and bending the metal sheet 200 are performed by using a press die that is capable of forming the first bending portion 1331 and the second bending portion 1332 in the metal sheet 200. By bending the metal sheet by using the press die, the first and second bending portions 1331, 1332 are formed in the metal sheet 200, and at the same time, portions of the metal sheet 200, which are located along the first bending portion 1331 and the second bending portion 1332, are bent at the aforementioned first bending angle BA1 and the aforementioned second bending angle BA2. The first bending portion 1331 is located adjacent to the through-hole 211, and extends to a lower end of the metal sheet 200. The second bending portion 1332 is convex toward the lower end of the metal sheet 200, and is connected to the first bending portion 1331. The second bending portion 1332 extends from one lateral end of the metal sheet 200 to an opposite lateral end of the metal sheet 200. Further, by bending the metal sheet 200 while forming the first and second bending portions 1331, 1332, a work-hardened portion corresponding to the shapes of the first bending portion 1331 and the second bending portion 1332 (e.g., the work-hardened portion shown in FIG. 7) is created within in the metal sheet 200. With regard to the step S130 of bending the metal sheet, the first bending portion 1331 and the second bending portion 1332 may be simultaneously formed in the metal sheet 200. As another example, the first bending portion 1331 may be formed in the metal sheet 200 prior to the second bending portion 1332, or the second bending portion 1332 may be formed in the metal sheet 200 prior to the first bending portion 1331.

Referring to FIGS. 29 and 30C, in the step S140, the ring support 1300 is formed from the metal sheet 200 which is formed with the first and second bending portions 1331, 1332 and is bent by the first and second bending portions. Forming the ring support 1300 from the metal sheet 200 may be performed through blanking using a press die. The ring support 1300 obtained from the metal sheet 200 is formed as a metallic thin plate that has the ring holding portion 1310 holding the guide ring, and the ring supporting portion 1320 integrally formed with the ring holding portion 1310. Further, in the ring support 1300, the ring supporting portion 1320 is bent at the first bending angle BA1 with reference to the first bending portion 1331 which extends from the vicinity of the ring holding hole 1311 to the lower end of the ring supporting portion 1320. Further, in the ring support 1300, the ring holding portion 1310 is bent at the second bending angle BA2 with respect to the ring supporting portion 1320 with reference to the second bending portion 1332 which extends from one lateral end of the ring support 1300 to an opposite lateral end of the ring support 1300 and is convex toward the lower end of the ring support 1300. The second bending portion 1332 becomes a boundary between the ring holding portion 1310 and the ring supporting portion 1320, and is connected to the first bending portion 1331 at a middle thereof.

Next, referring to FIGS. 29 and 30D, in the step S200, the attachment portion 1100 is injection molded from the carbon long fiber reinforced resin by using the ring support 1300 as an insert. When the ring support 1300 is used as an insert for injection molding, a lower portion of the ring support 1300 is inserted to a molding cavity for injection molding the attachment portion. Therefore, the attachment portion 1100 is injection molded as the lower portion of the ring supporting portion 1320 including a lower portion of the first bending portion 1331 is embedded in the attachment portion 1100. Further, the ring supporting portion 1320 of the ring support 1300 and the attachment portion 1100 are partially coupled to each other.

As shown in FIG. 29, the method of manufacturing a fishing line guide of an embodiment may include, after the step S200, a step S300 of fitting the guide ring to the ring holding hole. By fitting the guide ring 1200 shown in FIG. 3 to the ring holding hole 1311, the fishing line guide, which has the guide ring 1200 for guiding a fishing line and is attached to the tubular rod of a fishing rod, may be manufactured.

In this embodiment, the metal sheet is bent such that the first bending portion 1331 and the second bending portion 1332 are formed in the metal sheet. In some embodiment, the ring support may include only the first bending portion. Thus, the above-described step of bending the metal sheet may include a step of bending the metal sheet such that only the first bending portion is formed in the metal sheet. FIG. 30E shows an example of a metal sheet in which only the first bending portion is formed. From the metal sheet shown in FIG. 30E, a ring support, which has only the first bending portion and in which the ring supporting portion is bent at the first bending angle with reference to the first bending portion, may be formed.

In the fishing line guide of an embodiment including the ring support and the attachment portion shown in FIG. 30D, the ring support 1300 may be composed of pure titanium and the attachment portion 1100 may be composed of the carbon long fiber reinforced resin material. The specific gravity of pure titanium is 4.51, and the specific gravity of the carbon long fiber reinforced resin is 1.16. A fishing line guide of a comparative example may be assumed with regard to the weight reduction of the fishing line guide of an embodiment. The fishing line guide of a comparative example may include: an attachment portion composed of a polyoxymethylen resin of a specific gravity of 1.39; and a ring support composed of titanium alloy of a specific gravity of 5.03 and having an attachment ring fitted with the attachment portion. In the fishing line guide of a comparative example, a ratio of the volume occupied by the ring support to the total volume may be 23 to 41%. In contrast, in the fishing line guide of an embodiment, a ratio of the volume occupied by the ring support to the total volume may be 10 to 19%. Further, the fishing line guide of an embodiment may have a weight of 49 to 70% of the fishing line guide of a comparative example. As such, the fishing line guide of an embodiment has a remarkably light weight and can achieve the weight reduction.

FIG. 31 is a block diagram showing steps of a method of manufacturing a fishing line guide according to a second embodiment of the present disclosure. FIGS. 32A to 32F show concrete examples performed at the steps shown in FIG. 31. Hereinafter, among the steps of the method of manufacturing a fishing line guide according to this embodiment, descriptions on the same steps as the steps described with reference to FIG. 29 are omitted.

Referring to FIG. 31 and 32A, in the step S100 of working the ring support, a through-hole 212 is formed in the metal sheet 200 through the step S110 of forming the through-hole in the metal sheet. The through-hole 212 may become the ring holding hole shown in FIG. 11, and the guide ring shown in FIG. 11 may be coupled to the through-hole 212.

Referring to FIGS. 31 and 32B, in the method of manufacturing a fishing line guide according to this embodiment, the step S100 of working the ring support includes, before the step S130 of bending the metal sheet, a step S120 of forming a pair of first openings 1351, which are to be filled with the resin material, in the metal sheet 200. Forming the first openings 1351 may be performed through punching or drilling. As shown in FIG. 32C, if the first bending portion 1331 is formed in the metal sheet 200, the first bending portion 1331 passes between the pair of first openings 1351. The first openings 1351 are located symmetrically with respect to the first bending portion 1331. As shown in FIG. 32D, in the ring support 1300 blanked from the metal sheet 200, the first openings 1351 are located in the ring supporting portion 1320 of the ring support 1300.

Referring to FIGS. 31 and 32E, in the step S200 of injection molding the attachment portion, the attachment portion 1100 is injection molded from the carbon long fiber reinforced resin by using the ring support 1300 as an insert. When the ring support 1300 is used as an insert for injection molding, the lower portion of the ring support 1300 is inserted to the molding cavity for injection molding the attachment portion. Therefore, the attachment portion 1100 is injection molded as the lower portion of the ring supporting portion 1320 including both the lower portion of the first bending portion 1331 and the first openings 1351 is embedded in the attachment portion 1100. Through the step S200 of injection molding the attachment portion, the first openings 1351 are filled with the resin material composing the attachment portion 1100. Therefore, the first openings 1351 are coupled to the hardened resin material. Further, through the step S200 of injection molding the attachment portion, the aforementioned upper rib 2120 and the aforementioned lateral ribs 2130 are formed in the attachment portion 1100. In this regard, rib formers for forming the upper rib and the lateral ribs are provided in the molding cavity for injection molding the attachment portion 1100.

Next, referring to FIGS. 31 and 32E, in the step S300, the guide ring shown in FIG. 11 is fitted to the ring holding hole 2311 of the ring holding portion 1310 and thus the fishing line guide shown in FIG. 11 can be manufactured.

With regard to the step S120 of forming the first opening in the metal sheet, forming the second openings shown in FIGS. 2 and 3 may be performed before the step S130 of bending the metal sheet. FIG. 32F shows an example of forming the second openings 1352 in the metal sheet before bending the metal sheet.

FIG. 33 is a block diagram showing steps of a method of manufacturing a fishing line guide according to a third embodiment of the present disclosure. FIGS. 34A to 34F show concrete examples performed at the steps shown in FIG. 33. Hereinafter, among the steps of the method of manufacturing a fishing line guide according to this embodiment, descriptions on the same steps as the steps described with reference to FIG. 31 are omitted.

Referring to FIG. 33 and 34A, through the step S110 of forming the through-hole in the metal sheet in the step S100 of working the ring support, a through-hole 213 for forming the ring holding hole, to which the guide ring shown in FIG. 17 may be coupled, is formed in the metal sheet 200.

Referring to FIGS. 33, 34A and 34B, the step S110 of forming the through-hole in the step S100 of working the ring support includes a step S111 of forming the reinforcing flange 3312 by making the whole circumference of the through-hole 213 protrude from the metal sheet 200. Through the step S111, the reinforcing flange 3312 shown in FIG. 17, which has the fitting surface 3313 and the guide surface 3314 and defines the ring holding hole by the fitting surface 3313, may be formed in the ring support 1300. The reinforcing flange 3312 may protrude perpendicularly from the metal sheet 200. The inner peripheral surface of the reinforcing flange 3312 (specifically, the fitting surface 3313) may define the ring holding hole 2311 shown in FIG. 17, and the guide ring shown in FIG. 17 may be fitted to the inner peripheral surface of the reinforcing flange 3312. Forming the reinforcing flange 3312 may be performed through burring, for example, by making the whole edge portion of the through-hole 213 protrude by means of a press punch such that the whole edge portion of the through-hole is directed toward the tip of the fishing rod.

Referring to FIGS. 33 and 34E, the ring support 1300 is blanked from the metal sheet 200 in which the reinforcing flange 3312 is formed. Referring to FIGS. 33 and 34F, the attachment portion 1100 is injection molded from the carbon long fiber reinforced resin by using, as an insert, the ring support 1300 having the reinforcing flange 3312. Through the step S200 of injection molding the attachment portion 1100, a plurality of the serrations 3140 shown in FIG. 17 are formed in the inner peripheral surface 1112 of the attachment portion 1100. The serrations may be formed by a core pin that is disposed in the molding cavity for injection molding the attachment portion 1100. The core pin may have, in its outer peripheral surface, serrations that correspond to the shapes of the serrations of the attachment portion 1100.

Next, referring to FIGS. 33 and 34F, in the step S300, the guide ring shown in FIG. 21 is fitted to the ring holding hole 2311 of the ring holding portion 1310 and thus the fishing line guide shown in FIG. 17 can be manufactured. With regard to the step S300, the guide ring may be fitted from the guide surface 3314 to the fitting surface 3313.

As shown in FIGS. 33 and 34C, the step S100 of working the ring support includes the step S120 of forming the first openings 1351 in the metal sheet. With regard to the step S120, forming the second openings shown in FIGS. 2 and 3 may be performed together with the step of forming the first openings 1351 before the step S130 of bending the metal sheet. FIG. 34G shows an example of forming the second openings 1352 in the metal sheet before bending the metal sheet. Alternatively, the step S100 of working the ring support may not include the step of forming the first and second openings in the metal sheet.

FIG. 35 is a block diagram showing steps of a method of manufacturing a fishing line guide according to a fourth embodiment of the present disclosure. FIGS. 36A to 361 show concrete examples performed at the steps shown in FIG. 35. Hereinafter, among the steps of the method of manufacturing a fishing line guide according to this embodiment, descriptions on the same steps as the steps described with reference to FIG. 33 are omitted.

Referring to FIGS. 35 and 36C, the step S110 of forming the through-hole in the step S100 of working the ring support includes a step S112 of forming a plurality of the fitting protrusions 4315, which come into contact with the outer peripheral surface of the guide ring, in the inner peripheral surface of the reinforcing flange 3312 (specifically, the fitting surface 3313). Forming the fitting protrusions 4315 may be performed through shaving. For example, the fitting protrusions 4315 may be formed by cutting the fitting surface 3313 through shaving such that the fitting protrusions 4315 remain. Through the step S112, the ring support may be provided with the structure holding the guide ring by fitting at three locations.

Referring to FIGS. 35 and 36F, the ring support 1300 is blanked from the metal sheet 200 in which the reinforcing flange 3312 and the fitting protrusions 4315 are formed. Referring to FIGS. 35 and 36G, the attachment portion 1100 is injection molded together with the ring support 1300 from the carbon long fiber reinforced resin by using, as an insert, the ring support 1300 having the reinforcing flange 3312 and the fitting protrusions 4315. Next, referring to FIGS. 35 and 36G, in the step S300, the guide ring shown in FIG. 23 is fitted to the ring holding hole 2311 of the ring holding portion 1310 and thus the fishing line guide shown in FIG. 23 can be manufactured.

With regard to the step SI20 of forming the first openings 1351 shown in FIGS. 35 and 36D, the method of manufacturing a fishing line guide according to this embodiment may include the step of forming the second openings shown in FIGS. 2 and 3 in the metal sheet 200, or may not include the step of forming the first and second openings in the metal sheet. FIG. 36H shows an example of forming the second openings 1352 in the metal sheet before bending the metal sheet.

The fishing line guide shown in FIGS. 25 to 27 can be manufactured through the steps that are similar to the steps of the manufacturing method described with reference to FIGS. 29 and 30A to 30D. For example, through the steps similar to the steps described with reference to FIGS. 25 and 30Ato 30C, the ring support 5300 shown in FIGS. 25 and 27 may be worked from the metal sheet. Therefore, the ring support 5300 with the first and second bending portions 1331, 1332 formed therein may be obtained from the metal sheet. With regard to working the ring support 5300, the first openings shown in FIG. 32B or the second openings shown in FIG. 32F may be formed in the ring support 5300. Next, through the steps similar to the steps described with reference to FIGS. 25 and 30D, the attachment portion 5100 and the ring support 5300 shown in FIGS. 25 and 27 may be integrally coupled to each other through injection molding by using the ring support 5300 as an insert such that the lower portion of the ring support 5300 including the lower portion of the first bending portion is embedded in the attachment portion 5100.

As shown in FIGS. 30C, 32D, 34E and 36E, the ring support 1300 is formed through blanking from the metal sheet 200 in which the first and second bending portions 1331, 1332 are formed. That is, after the first and second bending portions 1331, 1332 are formed in the metal sheet 200, the ring support 1300 is blanked from the metal sheet 200. Therefore, the finished ring support 1300 has little change in its outer dimension. As shown in FIG. 361, the cut surfaces of the ring support 1300 (the lateral surfaces of the ring support 1300) cut from the metal sheet 200 do not have an angle with respect to the central axis of the ring holding hole. As shown in FIG. 361, the lateral surfaces 1312 of the ring holding portion 1310 and the lateral surfaces 1326 of the ring supporting portion 1320 form an acute angle AA with the front or rear surface of the ring support 1300. The size of the acute angle may be a half of the first bending angle BA1. In the case where a workpiece corresponding to the planar shape of the ring support 1300 is obtained from the metal sheet 200 through blanking and thereafter the first and second bending portions 1331, 1332 are formed in such a workpiece, the cut surfaces of the ring support 1300 form an approximately right angle with the front or rear surface of the ring support 1300 and thus the dimensional stability is deteriorated because of bending. That is, in such a case, the lateral surfaces 1312, 1326 of the ring support 1300 are inclined with respect to the direction of the central axis of the ring holding hole. However, the ring support 1300, which is blanked after forming the first and second bending portions 1331, 1332, has the cut surfaces that do not have an angle with respect to the central axis of the ring holding hole. Thus, the finished ring support 1300 can be precisely seated in the die for injection molding the attachment portion, and a molding defect such as resin leakage can be avoided.

According to the fishing line guide and the manufacturing method described above, the attachment portion 1100, 5100 is composed of the hardened resin material, and the ring support 1300, 5300 is composed of the metallic thin plate, and the attachment portion 1100, 5100 and the ring support 1300, 5300 are integrally coupled to each other through partial coupling. The ring support 1300, 5300 and the attachment portion 1100, 5100 are integrally coupled to each other through insert injection molding in such a manner that the lower portion of the ring supporting portion 1320, 5320 including the lower portion of the first bending portion 1331 or the lower portion of the ring supporting portion 1320 including both the lower portion of the first bending portion 1331 and the first openings 1351 is embedded in the attachment portion 1100, 5100. Accordingly, the fishing line guide according to the embodiments has, between the guide ring and the attachment portion, only the ring support 1300, 5300 which is partially embedded in the attachment portion and is composed of the metallic thin plate. That is, the fishing line guide according to the embodiments does not include a connection part such as an attachment ring that is fitted with an annular attachment portion. Further, the method of manufacturing a fishing line guide according to the embodiments does not include a process of forming the attachment ring in the ring support and a process of fitting the attachment ring with the annular attachment portion. Therefore, the fishing line guide of the embodiments can be manufactured by a smaller number of manufacturing processes. Further, since the ring support 1300, 5300 of the embodiments does not include a connection part such as the attachment ring, a single ring support 1300, 5300 may be integrally formed with the attachment portions 1100, 5100 having various outer diameters. That is, a single same ring support 1300, 5300 may be used in the attachment portions 1100, 5100 having various outer diameters. Accordingly, with regard to manufacturing of the fishing line guide of the embodiments, the molding cost and the number of required dies can be remarkably reduced. For example, when compared with a fishing line guide in which the ring support is fitted with the attachment portion by using a connection part such as the aforementioned attachment ring, the number of dies required for manufacturing the fishing line guide of the embodiments can be reduced by about 62%, and the molding cost can be reduced by about 27%.

The fishing line guide of an embodiment may be manufactured by using the ring support as an insert and injection molding the attachment portion from the carbon long fiber reinforced resin. Embodiments of an injection molding apparatus for use in manufacturing the fishing line guide according to the above-described embodiments are shown in FIGS. 37 to 42. FIG. 37 schematically shows an injection molding apparatus for use in manufacturing a fishing line guide. FIG. 38 is a plan view showing a lower die shown in FIG. 37. FIG. 39 is a perspective view showing a portion of the lower die shown in FIG. 37. FIG. 40 is a perspective view showing a core pin and an ejector sleeve. FIG. 41 is a perspective view showing the core pin, the ejector sleeve, and an injection-molded attachment portion. FIG. 42 illustrates an ejecting operation performed by the ejector sleeve.

According to the above-described embodiments, the fishing line guide includes: the annular attachment portion composed of the hardened resin material (e.g., the attachment portion 1100 shown in FIGS. 3, 11 and 17, the attachment portion 5100 shown in FIG. 25); and the ring support partially coupled to the attachment portion and composed of the metallic thin plate (e.g., the ring support 1300 shown in FIGS. 7, 15 and 18, the ring support 5300 shown in FIGS. 25 and 27). The attachment portion has the cylindrical inner peripheral surface that is fitted with the outer peripheral surface of the tubular rod of the fishing rod (e.g., one of the tubular rods shown in FIG. 1). The ring support includes: the ring holding portion (e.g., the ring holding portion 1310 shown in FIGS. 7, 15 and 18, the ring holding portion 5310 shown in FIGS. 25 and 27) that holds the guide ring for guiding the fishing line (e.g., the guide ring 1200, 2200 shown in FIGS. 3 and 11, the guide ring 5200 shown in FIGS. 25 and 26); and the ring supporting portion integrally formed with the ring holding portion (e.g., the ring supporting portion 1320 shown in FIGS. 7, 15 and 18, the ring supporting portion 5320 shown in FIGS. 25 and 27). The ring supporting portion is bent at the first bending angle (e.g., the first bending angle BA1 shown in FIG. 8) with reference to the first bending portion (e.g., the first bending portion 1331 shown in FIGS. 7, 15, 18 and 25) which extends to an end portion in the downward direction toward the tubular rod. The injection molding apparatus according to an embodiment may be used for manufacturing such a fishing line guide.

Referring to FIG. 37, the injection molding apparatus 300 includes an upper die 320, a lower die 330, and an ejector 340. The injection molding apparatus 300 has a base 310 that supports the lower die 330. The lower die 330 is supported by and fixed to the base 310. The upper die 320 is movable in a vertical direction by a drive mechanism (not shown) such that the upper die 320 approaches the lower die 330 or is separated from the lower die 330. The ejector 340 separates the injection-molded attachment portion 1100 from the lower die 330.

A guide rod 311 extending vertically is attached to the base 310, and the guide rod 311 passes through the lower die 330. A core pin 312 shown in FIG. 40 is disposed at an upper end of the guide rod 311. The core pin 312 forms the bore 1111 and the inner peripheral surface 1112 of the attachment portion 1100 shown in FIG. 3. That is, the core pin 312 has an outer peripheral shape that corresponds to the shape of the inner peripheral surface of the attachment portion 1100. The core pin 312 is attached to the upper end of the guide rod 311 by a screw 314. As shown in FIG. 40, serrations 313, which correspond to the shapes of the serrations 3140 shown in FIG. 17, are formed in the outer peripheral surface of the core pin 312. In other embodiment, in case of manufacturing the fishing line guides of the first and second embodiments in which the inner peripheral surface of the attachment portion does not have serrations, the outer peripheral surface of the core pin 312 has a cylindrical shape.

Referring to FIG. 37, the upper die 320 has, at a lower side thereof, a first molding cavity 321 that is formed to injection mold a portion of the attachment portion 1100. The first molding cavity 321 may be formed so as to approximately correspond to the shape of the small outer diameter portion 1114 of the attachment portion 1100. Further, a vertical injection passage 322 and a first horizontal injection passage 323 are formed in the upper die 320. A molten resin material (e.g., carbon long fiber reinforced resin) is injected into the vertical injection passage. The first horizontal injection passage extends from the vertical injection passage 322 and branches from the vertical injection passage 322. A first gate 324 is formed at an end of the first horizontal injection passage 323. The first gate communicates with the first molding cavity 321, and the resin material enters the first molding cavity 321 through the first gate.

Referring to FIGS. 37 to 39, the lower die 330 has, at an upper side thereof, a second molding cavity 331 formed to injection mold the remainder portion of the attachment portion 1100, and an insert seat 334 formed to extend from the second molding cavity 331.

The second molding cavity 331 may be formed so as to approximately correspond to the shape of the large outer diameter portion 1113 and the coupling portion 1117 of the attachment portion 1100 shown in FIG. 3. A second horizontal injection passage 332 is formed in the lower die 330, and a second gate 333 is formed at an end of the second horizontal injection passage 332. The second horizontal injection passage 332 communicates with the second molding cavity 331. The second gate 333 communicates with the second molding cavity 331, and the resin material enters the second molding cavity 331 through the second gate. If the upper die 320 and the lower die 330 are closed, the second horizontal injection passage 332 forms a single horizontal injection passage together with the first horizontal injection passage 323. If the upper die 320 and the lower die 330 are closed, the second gate 333 forms a single gate together with the first gate 324. Such a gate is located at the lowermost end of the large outer diameter portion 1113 of the attachment portion 1100. Further, if the upper die 320 and the lower die 330 are closed, the first molding cavity 321 and the second molding cavity 331 form a single molding cavity for molding the attachment portion. The core pin 312 shown in FIGS. 40 to 42 is located within such a single molding cavity.

As shown in FIG. 39, to injection mold the attachment portion, the ring support 1300 is seated on and fixed to the insert seat 334. The insert seat 334 is formed to extend from the second molding cavity 331 such that the lower portion of the ring support 1300 is inserted into the second molding cavity 331. Said lower portion of the ring support 1300, which is inserted into the second molding cavity 331, is the lower portion of the ring supporting portion 1320 that includes both the lower portion of the first bending portion 1331 and the first openings 1351. In other embodiment, said lower portion of the ring support 1300, which is inserted into the second molding cavity 331, may be the lower portion of the ring supporting portion 1320 including the lower portion of the first bending portion 1331.

The insert seat 334 communicates with the second molding cavity 331, and is concave from a top surface of the lower die 330. The insert seat 334 is formed such that the ring support 1300 bent by the first bending portion 1331 and the second bending portion 1332 is seated on the insert seat. Referring to FIGS. 38 and 39, the insert seat 334 has a bottom wall 335 and a side wall 336. The bottom wall 335 is formed so as to come into close contact with the front surface of the ring support 1300, except a portion of the ring support that is located within the area of the second molding cavity 331. The side wall 336 is formed so as to come into close contact with the lateral surface of the ring support 1300 (e.g., the lateral surface 1312, 1316 shown in FIG. 361). A protruding portion 337, which corresponds to the shape of the first bending portion 1331 of the ring support 1300, and a protruding portion 338, which corresponds to the shape of the second bending portion 1332 of the ring support 1300, may be formed in the bottom wall 335. Further, a boss, which can be inserted into the second opening 1352 of the ring support 1300, may be formed in the bottom wall 335. The shapes of the bottom wall and the side wall of the insert seat shown in FIGS. 38 and 39 are only illustrative. The bottom wall and the side wall of the insert seat may be formed so as to fix the ring supports according to the embodiments of the present disclosure.

The ejector 340 serves to push the attachment portion 1100 from the lower die 330 upwards, after the attachment portion 1100 is formed through injection molding. Referring to FIG. 37, the ejector 340 may include an ejector pin 341 having a columnar shape, and an ejector sleeve 342 having a cylindrical shape. After the injection molding, the ejector pin 341 and the ejector sleeve 342 eject the injection-molded attachment portion 1100.

As shown in FIG. 37, the ejector pin 341 comes into contact with a spool 351 and ejects the spool 351 upwards. The spool 351 exists in the passage through which the injected resin flows, and is a part that is formed by the hardened resin. The spool 351 is connected to the attachment portion 1100, and does not constitute the attachment portion 1100.

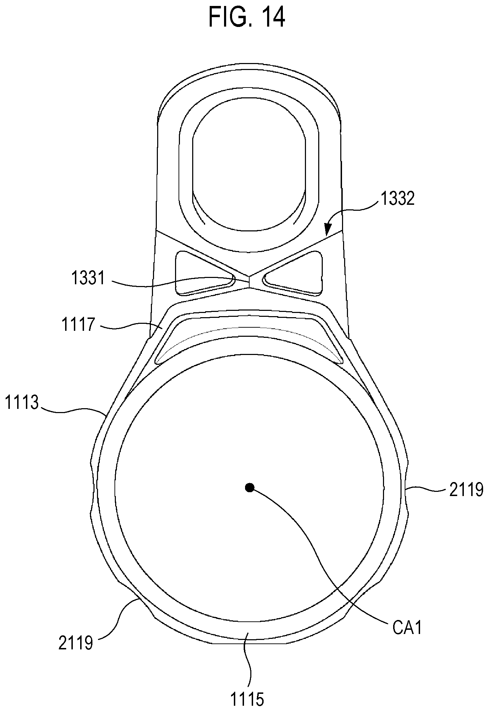

As shown in FIG. 37, the ejector sleeve 342 is attached to the guide rod 311. As shown in FIG. 40, the ejector sleeve 342 includes, at an upper end surface thereof, an ejecting surface 343 that comes into contact with the annular surface of the injection-molded attachment portion 1100 (e.g., the front end surface 1115 of the attachment portion shown in FIG. 14) throughout the entirety of the ejecting surface by surface contact. The ejecting surface 343 has an annular shape. Therefore, as shown in FIGS. 41 and 42, when the attachment portion 1100 is ejected from the lower die, a uniform force may be applied to the front end surface 1115 of the attachment portion 1100 from the ejecting surface 343 of the ejector sleeve 342 along the whole circumference of the front end surface 1115. Accordingly, deformation of the attachment portion, damage to the attachment portion or the like, which may be generated when ejecting the molded attachment portion from the lower die, can be prevented.

The technical idea of the present disclosure has been described heretofore with reference to some embodiments and examples shown in the accompanying drawings. However, it is to be understood that various substitutions, modifications and alterations may be made without departing from the scope of the present disclosure that can be understood by those of ordinary skill in the technical field to which the present disclosure pertains. Further, it is to be understood that such substitutions, modifications and alterations fall within the appended claims. The invention is defined by the appended claims.

### DESCRIPTION OF REFERENCE SYMBOLS

100 fishing rod, 101 tip of fishing rod, 102 butt of fishing rod, 110 rod body, 113 tubular rod, 130 fishing line, 1000 fishing line guide, 2000 fishing line guide, 3000 fishing line guide, 4000 fishing line guide, 5000 fishing line guide, 1100 attachment portion, 5110 attachment portion, 1112 inner peripheral surface, 1113 large outer diameter portion, 1114 small outer diameter portion, 1115 front end surface, 1116 rear end surface, 2120 upper rib, 2121 rear end surface, 2130 lateral rib, 2131 rear end surface, 1200 guide ring, 2200 guide ring, 5200 guide ring, 1300 ring support, 5300 ring support, 1310 ring holding portion, 5310 ring holding portion, 1311 ring holding hole, 2311 ring holding hole, 5311 ring holding hole, 3312 reinforcing flange, 4315 fitting protrusion, 1320 ring supporting portion, 5320 ring supporting portion, 1331 first bending portion, 1332 second bending portion, 1351 first opening, 5361 first lateral end edge, 5362 second lateral end edge, 5363 boundary portion, 200 metal sheet, 211 through-hole, 212 through-hole, 213 through-hole, 300 injection molding apparatus, 320 upper die, 321 first molding cavity, 330 lower die, 331 second molding cavity, 334 insert seat, 340 ejector, 342 ejector sleeve, 343 ejecting surface, BA1 first bending angle, BA2 second bending angle, CA1 central axis, TD frontward direction, BD rearward direction, UD upward direction, LD downward direction

## Claims

1. A method of manufacturing a fishing line guide (1000) which has a guide ring (1200) for guiding a fishing line (130) and is attachable to a tubular rod (113) of a fishing rod, the method comprising:
working a ring support (1300) composed of a metallic thin plate, the ring support comprising: a ring holding portion (1310) holding the guide ring (1200); and a ring supporting portion (1320) integrally formed with the ring holding portion, wherein the ring supporting portion (1320) is bent at a first bending angle (BA1) with reference to a first bending portion (1331) which extends to a lower end of the ring supporting portion in a downward direction toward the tubular rod (113) when the fishing line guide is attached to the fishing rod; and
injection molding an annular attachment portion (1100), which has an inner peripheral surface to be fitted with an outer peripheral surface of the tubular rod, from a resin material by using the ring support (1300) as an insert such that a lower portion of the ring supporting portion (1320) including a lower portion of the first bending portion (1331) is embedded in the attachment portion and the ring support (1300) and the attachment portion (1100) are partially coupled to each other.

2. The method of claim 1, wherein the resin material is a carbon long fiber reinforced resin.

3. The method of claim 1, wherein the working the ring support (1300) comprises:
forming a through-hole (211, 212, 213), to which the guide ring (1200) is coupled, in a metal sheet (200);
bending the metal sheet such that the first bending portion (1331) is formed in the metal sheet; and
blanking the ring support (1300) from the metal sheet.

4. The method of claim 3, wherein the ring holding portion (1310) is bent at a second bending angle (BA2) with respect to the ring supporting portion (1320) with reference to a second bending portion (1332) which is a boundary between the ring holding portion (1310) and the ring supporting portion (1320) and is connected to the first bending portion (1331) and which extends from one lateral end of the ring support (1300) to an opposite lateral end of the ring support and is convex toward a lower end of the ring support, and
wherein the bending the metal sheet comprises bending the metal sheet (200) such that the second bending portion (1332) is formed in the metal sheet.

5. The method of claim 3, wherein the working the ring support (1300) comprises, before the bending the metal sheet, forming a pair of first openings (1351) in the metal sheet (200), the pair of first openings being located in the ring supporting portion (1320) and formed to be perforated through the ring supporting portion symmetrically with respect to the first bending portion (1331), and
wherein the first openings (1351) are filled with the resin material through the injection molding the attachment portion (1100).

6. The method of claim 3, wherein the forming the through-hole further comprises forming a reinforcing flange (3312) by making the whole circumference of the through-hole protrude from the metal sheet (200), the reinforcing flange being fitted with the guide ring (1200) at an inner peripheral surface of the reinforcing flange.

7. The method of claim 6, wherein the forming the through-hole further comprises forming a plurality of fitting protrusions (4315) in the inner peripheral surface of the reinforcing flange (3312), the plurality of fitting protrusions coming into contact with an outer peripheral surface of the guide ring (1200).

8. An injection molding apparatus for use in manufacturing a fishing line guide (1000) which comprises an annular attachment portion (1100) and a ring support (1300), wherein the annular attachment portion (1100) is composed of a hardened resin material and has an inner peripheral surface to be fitted with an outer peripheral surface of a tubular rod (113) of a fishing rod, and wherein the ring support (1300) is composed of a metallic thin plate and has:
a ring holding portion (1310) holding a guide ring (1200) for guiding a fishing line (130); and
a ring supporting portion (1320) integrally formed with the ring holding portion and bent at a first bending angle (BA1) with reference to a first bending portion (1331) which extends to an end portion in a downward direction toward the tubular rod (113) when the fishing line guide is attached to the fishing rod,
the injection molding apparatus comprising:
an upper die (320) having a first molding cavity (321) formed to injection mold a portion of the attachment portion (1100);
a lower die (330) having a second molding cavity (331) formed to injection mold the remainder portion of the attachment portion (1100), and an insert seat (334) on which the ring support (1300) is seated on and fixed to, the insert seat being formed to extend from the second molding cavity such that a portion of the ring supporting portion (1320) including a portion of the first bending portion (1331) is inserted into the second molding cavity; and
an ejector (340) separating the injection-molded attachment portion (1100) from the lower die (330).

9. The injection molding apparatus of claim 8, wherein the ejector (340) comprises an ejector sleeve (342) having an annular ejecting surface (343) that comes into contact with an annular surface of the injection-molded attachment portion (1100) by surface contact.

## Patentansprüche

1. Verfahren zum Herstellen einer Angelschnurführung (1000), die einen Führungsring (1200) zum Führen einer Angelschnur (130) aufweist und die an einer rohrförmigen Rute (113) einer Angelrute befestigbar ist, das Verfahren umfassend:
Bearbeiten eines Ringträgers (1300), der aus einer metallischen dünnen Platte besteht, der Ringträger umfassend: einen Ringhalteabschnitt (1310), der den Führungsring (1200) hält; und einen Ringträgerabschnitt (1320), der mit dem Ringhalteabschnitt einstückig ausgebildet ist, wobei der Ringträgerabschnitt (1320) bei einem ersten Biegewinkel (BA1) bezogen auf einen ersten Biegeabschnitt (1331) gebogen ist, der sich zu einem unteren Ende des Ringträgerabschnitts in einer Abwärtsrichtung zu der rohrförmigen Rute (113) hin erstreckt, wenn die Angelschnurführung an der Angelrute befestigt ist; und
Spritzgießen eines ringförmigen Befestigungsabschnitts (1100), der eine innere Umfangsoberfläche aufweist, die mit einer äußeren Umfangsoberfläche der röhrenförmigen Rute aufgesetzt werden soll, aus einem Harzmaterial durch Verwenden des Ringträgers (1300) als einen Einsatz derart, dass ein unterer Abschnitt des Ringträgerabschnitts (1320), der einen unteren Abschnitt des ersten Biegeabschnitts (1331) beinhaltet, in den Befestigungsabschnitt eingebettet ist, und der Ringträger (1300) und der Befestigungsabschnitt (1100) teilweise miteinander gekoppelt sind.

2. Verfahren nach Anspruch 1, wobei das Harzmaterial ein kohlenstofflangfaserverstärktes Harz ist.

3. Verfahren nach Anspruch 1, wobei das Bearbeiten des Ringträgers (1300) Folgendes umfasst:
Ausbilden eines Durchgangslochs (211, 212, 213), mit dem der Führungsring (1200) gekoppelt ist, in einem Metallblech (200);
Biegen des Metallblechs derart, dass der erste Biegeabschnitt (1331) in dem Metallblech ausgebildet ist; und
Stanzen des Ringträgers (1300) aus dem Metallblech.

4. Verfahren nach Anspruch 3, wobei der Ringhalteabschnitt (1310) bei einem zweiten Biegewinkel (BA2) hinsichtlich des Ringträgerabschnitts (1320) bezogen auf einen zweiten Biegeabschnitt (1332) gebogen ist, der eine Grenze zwischen dem Ringhalteabschnitt (1310) und dem Ringträgerabschnitt (1320) ist und mit dem ersten Biegeabschnitt (1331) verbunden ist und der sich von einem seitlichen Ende des Ringträgers (1300) zu einem gegenüberliegenden seitlichen Ende des Ringträgers erstreckt und zu einem unteren Ende des Ringträgers hin konvex ist, und
wobei das Biegen des Metallblechs das Biegen des Metallblechs (200) derart umfasst, dass der zweite Biegeabschnitt (1332) in dem Metallblech ausgebildet ist.

5. Verfahren nach Anspruch 3, wobei das Bearbeiten des Ringträgers (1300) vor dem Biegen des Metallblechs das Ausbilden eines Paars erster Öffnungen (1351) in dem Metallblech (200) umfasst, wobei sich das Paar erster Öffnungen in dem Ringträgerabschnitt (1320) befindet und ausgebildet ist, um durch den Ringträgerabschnitt hindurch symmetrisch hinsichtlich des ersten Biegeabschnitts (1331) perforiert zu werden, und
wobei die ersten Öffnungen (1351) über das Spritzgießen des Befestigungsabschnitts (1100) mit dem Harzmaterial gefüllt sind.

6. Verfahren nach Anspruch 3, wobei das Ausbilden des Durchgangslochs ferner das Ausbilden eines Verstärkungsflansches (3312) umfasst, indem der gesamte Umfang des Durchgangslochs aus dem Metallblech (200) vorspringt, wobei der Verstärkungsflansch mit dem Führungsring (1200) an einer inneren Umfangsoberfläche des Verstärkungsflansches aufgesetzt ist.

7. Verfahren nach Anspruch 6, wobei das Ausbilden des Durchgangslochs ferner das Ausbilden einen Vielzahl von Passvorsprüngen (4315) in der inneren Umfangsoberfläche des Verstärkungsflansches (3312) umfasst, wobei die Vielzahl von Passvorsprüngen mit einer äußeren Umfangsoberfläche des Führungsrings (1200) in Kontakt kommen.

8. Spritzgießeinrichtung zur Verwendung bei dem Herstellen einer Angelschnurführung (1000), die einen ringförmigen Befestigungsabschnitt (1100) und einen Ringträger (1300) umfasst, wobei der ringförmige Befestigungsabschnitt (1100) aus einem gehärteten Harzmaterial besteht und eine innere Umfangsoberfläche aufweist, die mit einer äußeren Umfangsoberfläche einer röhrenförmigen Rute (113) einer Angelrute aufgesetzt ist, und wobei der Ringträger (1300) aus einer metallischen dünnen Platte besteht und Folgendes aufweist: einen Ringhalteabschnitt (1310), der einen Führungsring (1200) zum Führen einer Angelschnur (130) hält; und einen Ringträgerabschnitt (1320), der mit dem Ringhalteabschnitt einstückig ausgebildet und bei einem ersten Biegewinkel (BA1) bezogen auf einen ersten Biegeabschnitt (1331) gebogen ist, der sich zu einem Endabschnitt in einer Abwärtsrichtung zu der rohrförmigen Rute (113) hin erstreckt, wenn die Angelschnurführung an der Angelrute befestigt ist,
die Spritzgusseinrichtung umfassend:
ein Obergesenk (320), das einen ersten Formhohlraum (321) aufweist, der ausgebildet ist, um einen Abschnitt des Befestigungsabschnitts (1100 spritzzugießen;
ein Untergesenk (330), das einen zweiten Formhohlraum (331) aufweist, der ausgebildet ist um den Restabschnitt des Befestigungsabschnitts (1100) spritzzugießen, und einen Einsatzsitz (334), auf dem der Ringträger (1300) gesetzt wird und an dem er angebracht ist, wobei der Einsatzsitz ausgebildet ist, um sich von dem zweiten Formhohlraum derart zu erstrecken, dass ein Abschnitt des Ringträgerabschnitts (1320), der einen Abschnitt des ersten Biegeabschnitts (1331) beinhaltet, in den zweiten Formhohlraum eingesetzt wird; und
einen Auswerfer (340), der den spritzgegossenen Befestigungsabschnitt (1100) von dem Untergesenk (330) trennt.

9. Spritzgießeinrichtung nach Anspruch 8, wobei der Auswerfer (340) eine Auswerferhülse (342) umfasst, die eine ringförmige Auswurfoberfläche (343) aufweist, die durch einen Oberflächenkontakt mit einer ringförmigen Oberfläche des spritzgegossenen Befestigungsabschnitts (1100) in Kontakt kommt.

## Revendications

1. Procédé permettant de fabriquer un guide de ligne de pêche (1000) qui a un anneau de guidage (1200) pour guider une ligne de pêche (130) et qui peut être fixé à une tige tubulaire (113) d'une canne à pêche, le procédé comprenant :
la production d'un support d'anneau (1300) composé d'une plaque métallique mince, le support d'anneau comprenant : une partie de maintien d'anneau (1310) maintenant l'anneau de guidage (1200) ; et une partie de support d'anneau (1320) formée d'un seul tenant avec la partie de maintien d'anneau, la partie de support d'anneau (1320) étant pliée selon un premier angle de pliage (BA1) en fonction d'une première partie de pliage (1331) qui s'étend vers une extrémité inférieure de la partie de support d'anneau dans une direction vers le bas vers la tige tubulaire (113) lorsque le guide de ligne de pêche est fixé à la canne à pêche ; et
le moulage par injection d'une partie de fixation annulaire (1100), qui a une surface périphérique interne destinée à être ajustée sur une surface périphérique externe de la tige tubulaire, à partir d'un matériau de résine à l'aide d'un support d'anneau (1300) comme insert de telle sorte qu'une partie inférieure de la partie de support d'anneau (1320) comportant une partie inférieure de la première partie de pliage (1331) est intégrée dans la partie de fixation et le support d'anneau (1300) et la partie de fixation (1100) sont partiellement accouplés l'un à l'autre.

2. Procédé selon la revendication 1, dans lequel le matériau de résine est une résine renforcée de fibres de carbone longues.

3. Procédé selon la revendication 1, dans lequel la fabrication du support d'anneau (1300) comprend :
la formation d'un trou traversant (211, 212, 213), auquel l'anneau de guidage (1200) est accouplé, dans une feuille métallique (200) ;
le pliage de la feuille métallique de telle sorte que la première partie de pliage (1331) est formée dans la feuille métallique ; et
le découpage du support d'anneau (1300) dans la feuille métallique.

4. Procédé selon la revendication 3, dans lequel la partie de maintien d'anneau (1310) est pliée selon un second angle de pliage (BA2) par rapport à la partie de support d'anneau (1320) en fonction d'une seconde partie de pliage (1332) qui est une limite entre la partie de maintien d'anneau (1310) et la partie de support d'anneau (1320) et est reliée à la première partie de pliage (1331) et qui s'étend d'une extrémité latérale du support d'anneau (1300) à une extrémité latérale opposée du support d'anneau et est convexe vers une extrémité inférieure du support d'anneau, et
dans lequel le pliage de la feuille métallique comprend le pliage de la feuille métallique (200) de telle sorte que la seconde partie de pliage (1332) est formée dans la feuille métallique.

5. Procédé selon la revendication 3, dans lequel la production du support d'anneau (1300) comprend, avant le pliage de la feuille métallique, la formation d'une paire de premières ouvertures (1351) dans la feuille métallique (200), la paire de premières ouvertures étant situées dans la partie de support d'anneau (1320) et formées pour être perforées à travers la partie de support d'anneau symétriquement par rapport à la première partie de pliage (1331), et
dans lequel les premières ouvertures (1351) sont remplies avec le matériau de résine par l'injection permettant le moulage de la partie de fixation (1100).

6. Procédé selon la revendication 3, dans lequel la formation du trou traversant comprend en outre la formation d'un collet de renfort (3312) en faisant saillir toute la circonférence du trou traversant dans la feuille métallique (200), le collet de renfort étant ajusté sur l'anneau de guidage (1200) au niveau d'une surface périphérique interne du collet de renfort.

7. Procédé selon la revendication 6, dans lequel la formation du trou traversant comprend en outre la formation d'une pluralité de saillies d'ajustement (4315) dans la surface périphérique interne du collet de renfort (3312), la pluralité de saillies d'ajustement entrant en contact avec une surface périphérique externe de l'anneau de guidage (1200).

8. Appareil de moulage par injection destiné à être utilisé dans la fabrication d'un guide de ligne de pêche (1000) qui comprend une partie de fixation annulaire (1100) et un support d'anneau (1300), la partie de fixation annulaire (1100) étant composée d'un matériau en résine durcie et présentant une surface périphérique interne destinée à être ajustée sur une surface périphérique externe d'une tige tubulaire (113) d'une canne à pêche, et le support d'anneau (1300) étant composé d'une plaque métallique mince et présentant : une partie de maintien d'anneau (1310) retenant un anneau de guidage (1200) pour guider une ligne de pêche (130) ; et une partie de support d'anneau (1320) formée d'un seul tenant avec la partie de maintien d'anneau et pliée selon un premier angle de pliage (BA1) en fonction d'une première partie de pliage (1331) qui s'étend vers une partie d'extrémité dans une direction vers le bas vers la tige tubulaire (113) lorsque le guide de ligne de pêche est fixé à la canne à pêche,
l'appareil de moulage par injection comprenant :
une matrice supérieure (320) présentant une première cavité de moulage (321) formée pour mouler par injection une partie de la partie de fixation (1100) ;
une matrice inférieure (330) présentant une seconde cavité de moulage (331) formée pour mouler par injection la partie restante de la partie de fixation (1100), et un siège d'insert (334) sur lequel le support d'anneau (1300) est posé et fixé, le siège d'insert étant formé pour s'étendre à partir de la seconde cavité de moulage de telle sorte qu'une partie de la partie de support d'anneau (1320) comportant une partie de la première partie de pliage (1331) est insérée dans la seconde cavité de moulage ; et
un éjecteur (340) séparant la partie de fixation moulée par injection (1100) de la matrice inférieure (330).

9. Appareil de moulage par injection selon la revendication 8, dans lequel l'éjecteur (340) comprend une douille d'éjection (342) présentant une surface d'éjection annulaire (343) qui entre en contact avec une surface annulaire de la partie de fixation moulée par injection (1100) par contact de surface.
